(19) Europäisches Patentamt
European Patent Office
Office européen des brevets

(11) EP 3 257 872 B1

(12) EUROPEAN PATENT SPECIFICATION

(45) Date of publication and mention of the grant of the patent:
**22.04.2020 Bulletin 2020/17**

(21) Application number: **16749285.9**

(22) Date of filing: **10.02.2016**

(51) Int Cl.:
***C08F 2/44*** *(2006.01)* ***G02B 5/30*** *(2006.01)*
***G02F 1/13363*** *(2006.01)* ***G02F 1/1337*** *(2006.01)*
***C09K 19/56*** *(2006.01)*

(86) International application number:
**PCT/JP2016/053990**

(87) International publication number:
**WO 2016/129642 (18.08.2016 Gazette 2016/33)**

(54) **ORIENTATION MATERIAL AND RETARDATION MATERIAL**

ORIENTIERUNGSSMATERIAL UND RETARDIERUNGSMATERIAL

MATÉRIAU D'ORIENTATION ET MATÉRIAU À RETARD

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.02.2015 JP 2015024748**

(43) Date of publication of application:
**20.12.2017 Bulletin 2017/51**

(73) Proprietor: **Nissan Chemical Corporation**
**Tokyo (JP)**

(72) Inventors:
- **KANNO, Yuta**
**Funabashi-shi**
**Chiba 274-0052 (JP)**
- **ITO, Jun**
**Funabashi-shi**
**Chiba 274-0052 (JP)**
- **HATANAKA, Tadashi**
**Funabashi-shi**
**Chiba 274-0052 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 557 120**
**WO-A1-2014/136889**
**JP-A- 2008 299 327**
**JP-A- 2015 152 744**
**JP-A- 2015 229 753**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 257 872 B1

## Description

TECHNICAL FIELD

The present invention relates to an orientation material, and a retardation material useful for preparing a +C plate (positive C plate) used to improve viewing angle characteristics of a liquid crystal display (LCD), which is specifically an IPS liquid crystal display (In-plane Switching LCD) filled with liquid crystals having positive dielectric anisotropy ($\Delta\varepsilon > 0$).

BACKGROUND ART

IPS-LCDs feature small changes in brightness/color depending on the viewing angle, because the liquid crystal molecules are not tilted in the vertical direction. One drawback of the IPS-LCDs, however, is that it is difficult to increase the contrast ratio, brightness, and response speed. As disclosed in Patent Document 1, for example, an early proposed IPS-LCD does not include a compensation film for viewing angles. Such an IPS-LCD without a compensation film for viewing angles has the disadvantage of exhibiting a low contrast ratio due to a relatively large amount of light leakage in a dark state at a tilt angle.

Patent Document 2 discloses an IPS-LCD compensation film including a +C-plate and a +A-plate (positive A plate). This document discloses that the liquid crystal display device described therein has the following characteristics:

1) A liquid crystal layer having a horizontal orientation is sandwiched between two substrates to which an electric field parallel to the liquid crystal layer surface can be applied by means of electrodes.
2) At least one +A-plate and +C-plate are sandwiched between two polarizer plates.
3) A main optical axis of the +A-plate is perpendicular to a main optical axis of the liquid crystal layer.
4) The retardation value $R_{LC}$ of the liquid crystal layer, the retardation value $R_{+C}$ of the +C-plate, and the retardation value $R_{+A}$ of the +A-plate are determined to satisfy the following equation:

$$R_{LC} : R_{+C} : R_{+A} \approx 1:0.5:0.25$$

5) A relationship between the retardation values of the +A-plate and +C-plate and a retardation value in the thickness direction of a polarizer plate protective film (TAC, COP and PNB) is not disclosed.

Furthermore, an IPS-LCD having a +A-plate and a +C-plate is disclosed which is intended to provide high contrast characteristics and a low color shift at the front and at a tilt angle, by minimizing light leakage in a dark state at the tilt angle (Patent Document 3).

Prior Art Documents

Patent Documents

Patent Document 1: Japanese Patent Application Publication No. H02-256023 (JP H02-256023 A)
Patent Document 2: Japanese Patent Application Publication No. HI 1-133408 (JP H11-133408 A)
Patent Document 3: Japanese Patent Application Publication No. 2009-122715 (JP 2009-122715 A)
Patent Document 4: Japanese Patent Application Publication No. 2001-281669 (JP 2001-281669 A)
Patent Document D5: European Patent Application Publication No. EP 2 557 120 A1
Patent Document D6: Japanese Patent Application Publication No. JP 2008 299327 A
Patent Document D7: International Patent Application Publication No. WO 2014/136889 A1

SUMMARY OF THE INVENTION

Problem to be Solved by the Invention

As previously proposed, a +C-plate is very useful as an optical compensation film for an IPS-LCD, because the +C-plate can compensate for light leakage from the polarizing plates at a wide viewing angle. With a commonly known conventional stretching treatment, however, it is difficult to achieve vertical orientation (positive C-plate) properties.

Moreover, a vertical orientation film obtained using a polyimide has been previously proposed. The preparation of this film, however, requires the use of a solvent for the polyimide, such as N-methyl-2-pyrrolidone. This damages a film base material during the formation of the orientation film, although this is not the case for a glass base material. Additionally, the vertical orientation film obtained using a polyimide needs to be baked at high temperatures; however, the film base material is not resistant to such high temperatures.

Furthermore, a method for forming a vertical orientation film by directly treating a base material with, for example, a silane coupling agent having a long-chain alkyl has been proposed (Patent Document 4). With this method, however, the type of base material is limited because the treatment is difficult if there is no hydroxy group on the base material surface.

Furthermore, when a patterned retardation material for a 3D display is to be manufactured using a photo-orientation technology, such a retardation material has conventionally been formed on a glass substrate. To meet the recent demand for a reduction in manufacturing costs, however, there is a demand for the production of the retardation material on an inexpensive resin film such as a TAC (triacetyl cellulose) film or a COP (cycloolefin polymer) film, using the so-called roll-to-roll process.

However, the photo-orientation film formed of a conventional material as described above has low adhesion to the resin film, and hence, it is difficult to manufacture a highly reliable patterned retardation material on the resin film.

There is, therefore, a need for an orientation material having excellent adhesion such that it can form a highly reliable retardation material even on a resin film such as a TAC film, and applicable to the photo-orientation technology, as well as a cured film-forming composition for forming such an orientation material.

The present invention has been made based on the foregoing findings or research results, and an object to be solved by the present invention is to provide a cured film-forming composition for providing an orientation material that has excellent vertical orientation properties, exhibits transparency and solvent resistance required in an optical compensation film, and can vertically orient polymerizable liquid crystals even on a resin film stably under low-temperature, short-time baking conditions.

Another object of the present invention is to provide an orientation material that is obtained from the above-described cured film-forming composition, exhibits excellent vertical orientation properties along with solvent resistance, and can vertically orient polymerizable liquid crystals even on a resin film stably under low-temperature, short-time baking conditions, as well as a retardation material useful for a +C-plate formed using the orientation material.

Other objects and advantages of the present invention will become apparent from the following description.

Means for Solving the Problem

The present inventors conducted extensive research to accomplish the foregoing objects, and consequently found that an orientation material characterized by being obtainable by curing a cured film having excellent vertical orientation properties regardless of the type of base material can be formed by selecting a cured film-forming material containing a low-molecular-weight compound having a long-chain alkyl group as a side chain, thus completing the present invention.

The cured film-forming composition comprising:

(A) a low-molecular-weight compound having a group with vertical orientation properties and a thermally crosslinkable functional group; and
(B) a crosslinking agent,
wherein component (A) is selected from:

- (A-1): an alcohol compound wherein a hydroxy group is attached to the group with vertical orientation properties;
- (A-2): a phenolic compound wherein a hydroxy group is attached to the group with vertical orientation properties;
- (A-3): a carboxylic acid compound wherein a carboxyl group is attached to the group with vertical orientation properties;
- (A-4): an amine compound wherein an amino group is attached to the group with vertical orientation properties;
- (A-5): an alkoxylsilane compound wherein an alkoxysilyl group is attached to the group with vertical orientation properties;
- (A-6): a compound obtained by reacting the phenolic compound (A-2) or carboxylic acid compound (A-3) with a compound having a group selected from an epoxy group and an episulfide group;

wherein the group with vertical orientation properties is selected from: (a-1): an alkyl group, wherein the total number of carbon atoms is 6 to 20;
(a-2): a group of formula [1]:

$$-Y^1-Y^2-Y^3-Y^4-\left(-Y^5-\right)_n-Y^6 \qquad [1]$$

wherein
each of $Y^1$ to $Y^4$ is a single bond; $Y^5$ is a divalent cyclic group selected from a benzene ring and a cyclohexane ring; n is an integer from 2 to 3, wherein $Y^5$s may be the same or different; $Y^6$ is a $C_{1-18}$ alkyl group;
with the proviso that a total number of carbon atoms is 6 to 30;
(a-3): a group of formula [1]:
wherein each of $Y^1$ to $Y^3$ is a single bond; $Y^4$ is a divalent $C_{17-30}$ organic group having a steroid skeleton; n is zero; $Y^6$ is a hydrogen atom.

Effects of the Invention

According to the present invention, an orientation material can be provided which has excellent vertical orientation properties, and can vertically orient polymerizable liquid crystals stably under low-temperature, short-time baking conditions.

According to the present invention, a retardation material can be provided which can be efficiently formed even on a resin film, and has high transparency, high solvent resistance, and adhesion between a substrate and a liquid crystal film.

MODES FOR CARRYING OUT THE INVENTION

<Cured Film-Forming Composition>

The cured film-forming composition contains (A) a low-molecular-weight compound having a group with vertical orientation properties and a thermally crosslinkable functional group, and (B) a crosslinking agent. The cured film-forming composition may contain, in addition to the components (A) and (B), a polymer having a thermally crosslinkable group as a component (C). The cured film-forming composition may further contain an adhesion accelerator as a component (D). The cured film-forming composition may further contain a crosslinking catalyst as a component (E). The cured film-forming composition may further contain other additives, without impairing the effects of the present invention.

Each of the components will be described in detail below.

<Component (A)>

The component (A) contained in the cured film-forming composition is a low-molecular-weight compound having a group with vertical orientation properties and a thermally crosslinkable functional group (hereinafter also referred to as the "thermally crosslinkable group").

As used herein, the "group with vertical orientation properties" represents, for example, a group containing a hydrocarbon group having a carbon atom number of about 6 to 30, and specifically refers to a group of formula [1]:

$$-Y^1-Y^2-Y^3-Y^4-\left(-Y^5-\right)_n-Y^6 \qquad [1]$$

According to the invention a group with vertical orientation properties is, for example, an alkyl group wherein each of $Y^1$, $Y^2$ and $Y^4$ is a single bond, $Y^3$ is a single bond or a $C_{1-15}$ alkylene group, n is zero, $Y^6$ is a $C_{1-18}$ alkyl group, and the total number of carbon atoms in $Y^3$ and $Y^6$ is 6 to 20. Examples of such alkyl groups include an alkyl group (a-1) wherein the total number of carbon atoms is 6 to 20, among the above-mentioned alkyl groups.

According to the invention the group with vertical orientation properties is, for example, a group with vertical orientation properties (a-2) wherein each of $Y^1$ to $Y^4$ is a single bond, n is 2 or 3, $Y^5$ is a divalent cyclic group selected from a benzene ring and a cyclohexane ring, and $Y^6$ is a $C_{1-18}$ alkyl group. Preferred as such groups (a-2) are, for example, the following groups (a-2-1) to (a-2-7):

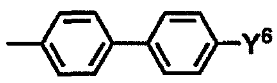

(a-2-1)

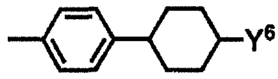

(a-2-2)

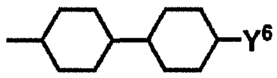

(a-2-3)

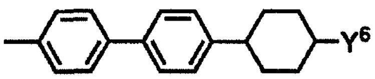

(a-2-4)

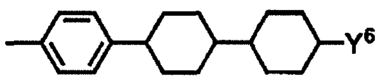

(a-2-5)

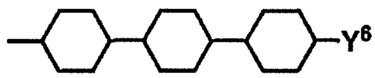

(a-2-6)

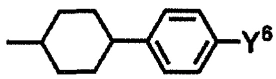

(a-2-7)

(wherein $Y^6$ is a $C_{1-18}$ alkyl group.)

According to the invention the group with vertical orientation properties is, for example, a group with vertical orientation properties (a-3) wherein each of $Y^1$ to $Y^3$ is a single bond, $Y^4$ is a divalent $C_{17-30}$ organic group having a steroid skeleton, n is zero, and $Y^6$ is a hydrogen atom. Examples of such groups (a-3) include groups with vertical orientation properties (a-3-1) to (a-3-8) of the following formulae:

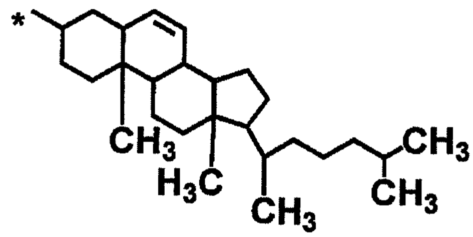

(a-3-1)

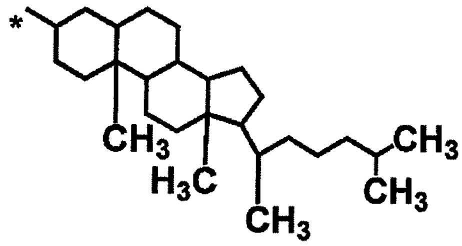

(a-3-2)

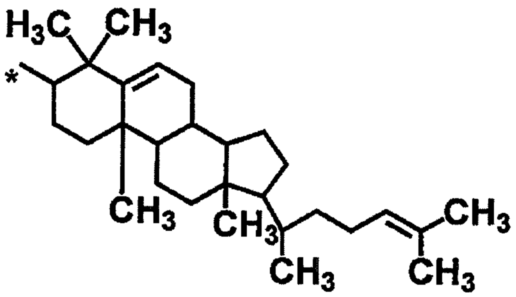

(a-3-3)

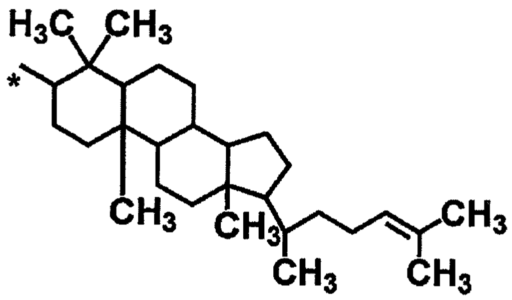

(a-3-4)

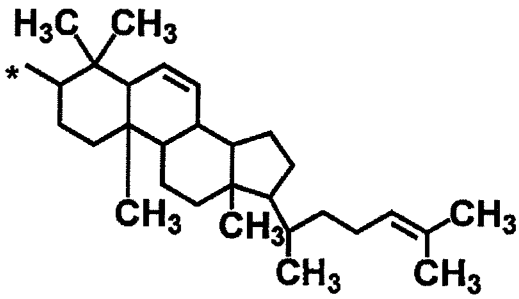

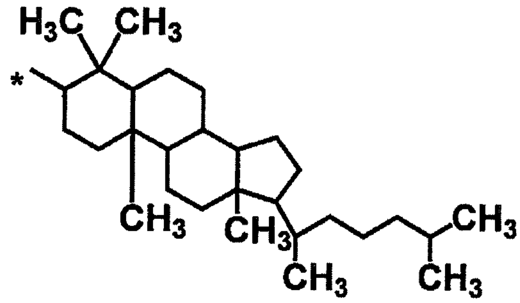

(a-3-5)

(a-3-6)

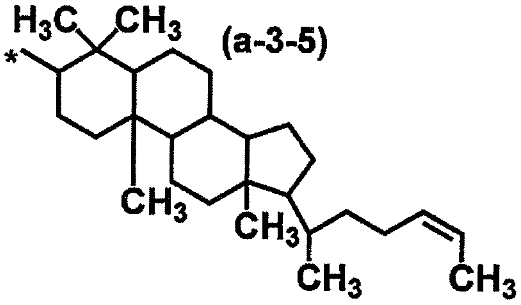

(a-3-7)

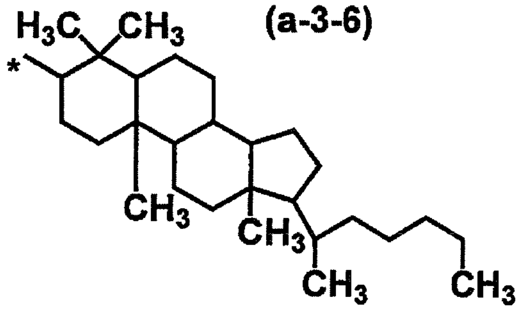

(a-3-8)

(wherein * is a binding position.)

According to the invention the component (A), which is a low-molecular-weight compound having a group with vertical orientation properties and a thermally crosslinkable group, include a compound to which a thermally crosslinkable group is attached, which is selected from an alcohol compound A-1 wherein a hydroxy group is attached to the group with vertical orientation properties of formula (1) above; a phenolic compound A-2 wherein a hydroxy group is attached to the group with vertical orientation properties of formula (1) above; a carboxylic acid compound A-3 wherein a carboxyl group is attached to the group with vertical orientation properties of formula (1) above; an amine compound A-4 wherein an amino group is attached to the group with vertical orientation properties of formula (1) above; and an alkoxysilane compound A-5 wherein an alkoxysilyl group is attached to the group with vertical orientation properties of formula (1) above.

Preferred compounds as the component (A) are as follows.

Examples of the alcohol compound A-1 include a compound wherein a hydroxy group is attached to the alkyl group (a-1), and specific examples include capryl alcohol, 1-decanol, lauryl alcohol, myristyl alcohol, palmityl alcohol, stearyl alcohol, and arachidyl alcohol.

Examples of the alcohol compound A-1 include alcohols wherein hydroxy groups are attached to the groups (a-3-1) to (a-3-8) shown above. Specific examples include cholesterol, lanosterol, and ergosterol.

Additionally, examples of the alcohol compound A-1 include a compound wherein a hydroxy group is attached to the group (a-2-3), (a-2-6), or (a-2-7) shown above.

Examples of the phenolic compound A-2 include a compound wherein a hydroxy group is attached to the group (a-2-1), (a-2-2), (a-2-4), or (a-2-5) shown above.

Examples of the carboxylic acid compound A-3 include a compound wherein a carboxyl group is attached to the alkyl group (a-1). Examples of such compounds include long-chain carboxylic acids such as enanthic acid, caprylic acid, capric acid, lauric acid, myristic acid, palmitic acid, stearic acid, and arachidic acid.

Additionally, examples of the carboxylic acid compound A-3 include compounds wherein carboxyl groups are attached to the groups (a-2-1) to (a-2-7) shown above.

Examples of the amine compound A-4 include a compound wherein an amino group is attached to the alkyl group (a-1). Examples of such compounds include long-chain amines such as $CH_3(CH_2)_5NH_2$; $CH_3(CH_2)_6NH_2$; $CH_3(CH_2)_7NH_2$; $CH_3(CH_2)_8NH_2$; $CH_3(CH_2)_9NH_2$; $CH_3(CH_2)_{10}NH_2$; $CH_3(CH_2)_{11}NH_2$; $CH_3(CH_2)_{12}NH_2$; $CH_3(CH_2)_{13}NH_2$; $CH_3(CH_2)_{14}NH_2$; $CH_3(CH_2)_{15}NH_2$; $CH_3(CH_2)_{16}NH_2$; $CH_3(CH_2)_{17}NH_2$; $CH_3(CH_2)_{18}NH_2$; and $CH_3(CH_2)_{19}NH_2$.

Additionally, examples of the amine compound A-4 include compounds wherein amino groups are attached to the groups (a-2-1) to (a-2-7) shown above.

Examples of the alkoxysilane compound A-5 include a compound wherein an alkoxysilyl group is attached to

the alkyl group (a-1). Examples of such compounds include $CH_3(CH_2)_5NHSi(OCH_3)_3$; $CH_3(CH_2)_6Si(OCH_3)_3$; $CH_3(CH_2)_7Si(OCH_3)_3$; $CH_3(CH_2)_8Si(OCH_3)_3$; $CH_3(CH_2)_9Si(OCH_3)_3$; $CH_3(CH_2)_{10}Si(OCH_3)_3$; $CH_3(CH_2)_{11}Si(OCH_3)_3$; $CH_3(CH_2)_{12}Si(OCH_3)_3$; $CH_3(CH_2)_{13}Si(OCH_3)_3$; $CH_3(CH_2)_{14}Si(OCH_3)_3$; $CH_3(CH_2)_{15}Si(OCH_3)_3$; $CH_3(CH_2)_{16}Si(OCH_3)_3$; $CH_3(CH_2)_{17}Si(OCH_3)_3$; $CH_3(CH_2)_{18}Si(OCH_3)_3$; $CH_3(CH_2)_{19}Si(OCH_3)_3$; $CH_3(CH_2)_5Si(OCH_2CH_3)_3$; $CH_3(CH_2)_6Si(OCH_2CH_3)_3$; $CH_3(CH_2)_7Si(OCH_2CH_3)_3$; $CH_3(CH_2)_8Si(OCH_2CH_3)_3$; $CH_3(CH_2)_9Si(OCH_2CH_3)_3$; $CH_3(CH_2)_{10}Si(OCH_2CH_3)_3$; $CH_3(CH_2)_{11}Si(OCH_2CH_3)_3$; $CH_3(CH_2)_{12}Si(OCH_2CH_3)_3$; $CH_3(CH_2)_{13}Si(OCH_2CH_3)_3$; $CH_3(CH_2)_{14}Si(OCH_2CH_3)_3$; $CH_3(CH_2)_{15}Si(OCH_2CH_3)_3$; $CH_3(CH_2)_{16}Si(OCH_2CH_3)_3$; $CH_3(CH_2)_{17}Si(OCH_2CH_3)_3$; $CH_3(CH_2)_{18}Si(OCH_2CH_3)_3$; and $CH_3(CH_2)_{19}Si(OCH_2CH_3)_3$.

According to the invention low-molecular-weight compounds as the component (A) include a compound A-6 obtained by reacting the phenolic compound A-2 or carboxylic acid compound A-3 with a compound having a group selected from an epoxy group and an episulfide group.

Examples of compounds having one epoxy group in the molecule include 2-ethylhexylglycidyl ether, glycidyl ether of lauryl alcohol, alkylene oxide-modified glycidyl ether of a fatty alcohol, phenyl glycidyl ether, p-(t-butyl)phenyl glycidyl ether, alkylene oxide-modified glycidyl ether of phenol, allyl glycidyl ether, and alkylene oxide-modified glycidyl ether of allyl alcohol.

Examples of compounds having two or more epoxy groups in the molecule include ethylene glycol diglycidyl ether; 1,6-hexanediol diglycidyl ether; trimethylolpropane triglycidyl ether; diglycidylaniline; bisphenol A diglycidyl ether; bisphenol F diglycidyl ether; tris(2,3-epoxypropyl)isocyanurate; N,N,N',N'-tetraglycidyl-m-xylylenediamine; and 1,3-bis(N,N'-diglycidylaminomethyl)cyclohexane.

Examples of commercially available compounds among the above-mentioned compounds having epoxy group(s) include bisphenol A-type epoxy resins such as EPICOAT 828EL and EPICOAT 1004 (both from Japan Epoxy Resins Co., Ltd.); bisphenol F-type epoxy resins such as EPICOAT 806 and EPICOAT 4004 (both from Japan Epoxy Resins Co., Ltd.); bisphenol E-type epoxy resins such as R-710 (from Mitsui Petrochemical Industries Co., Ltd.); bisphenol S-type epoxy resins such as EPICLON EXA1514 (from Dainippon Ink Co., Ltd.); 2,2'-diallylbisphenol A-type epoxy resins such as RE-810NM (from Nippon Kayaku Co., Ltd.); hydrogenated bisphenol-type epoxy resins such as EPICLON EXA7015 (from Dainippon Ink Co., Ltd.); bisphenol A propylene oxide-adduct-type epoxy resins such as EP-4000S (from Asahi Denka Co., Ltd.); resorcinol-type epoxy resins such as EX-201 (from Nagase ChemteX Corporation); biphenyl-type epoxy resins such as EPICOAT YX-4000H (from Japan Epoxy Resins Co., Ltd.); sulfide-type epoxy resins such as YSLV-50TE (from Tohto Kasei Co., Ltd.); biphenyl ether-type epoxy resins such as YSLV-80DE (from Tohto Kasei Co., Ltd.); dicyclopentadiene-type epoxy resins such as EP-4088S (from Asahi Denka Co., Ltd.); naphthalene-type epoxy resins such as EPICLON HP4032 and EPICLON EXA-4700 (both from Dainippon Ink Co., Ltd.); glycidylamine-type epoxy resins such as EPICOAT 630 (from Japan Epoxy Resins Co., Ltd.), EPICLON 430 (from Dainippon Ink Co., Ltd.), and TETRAD-X (from Mitsubishi Gas Chemical Company, Inc.); alkyl polyol-type epoxy resins such as ZX-1542 (from Tohto Kasei Co., Ltd.), EPICLON 726 (from Dainippon Ink Co., Ltd.), Epolite 80MFA (from Kyoei Chemical Co., Ltd.), and DENACOL EX-611 (from Nagase ChemteX Corporation); glycidyl ester compounds such as DENACOL EX-147 (from Nagase ChemteX Corporation); other products such as YDC-1312, YSLV-80XY, and YSLV-90CR (all from Tohto Kasei Co., Ltd.), XAC4151 (from Asahi Kasei Corporation), EPICOAT 1031 and EPICOAT 1032 (both from Japan Epoxy Resins Co., Ltd.), EXA-7120 (from Dainippon Ink Co., Ltd.), and TEPIC (from Nissan Chemical Industries, Ltd.).

Furthermore, an episulfide resulting from the substitution of an oxygen atom in any of these compounds having epoxy group(s) with a sulfur atom can be used.

Preferred among these compounds having epoxy group(s) are low-molecular-weight compounds having a plurality of epoxy groups, such as EPICOAT 828EL (from Japan Epoxy Resins Co., Ltd.) and TEPIC (from Nissan Chemical Industries, Ltd.).

To produce the compound A-6 by reacting the carboxylic acid compound A-2 or phenolic compound A-3 with any of the above-described compounds having epoxy group(s), 1 to 1.2 equivalents of the carboxylic acid compound A-2 or phenolic compound A-3 relative to the epoxy group(s) of the compound having epoxy group(s) are reacted in a solvent containing a reaction catalyst, for example, at a temperature of 50 to 150°C. The solvent to be used in this case is not particularly limited as long as it dissolves the carboxylic acid compound A-2, the phenolic compound A-3, the compound having epoxy group(s), the reaction solvent, and the like. Specifically, solvents mentioned as examples in <Solvent> below can be suitably used. Examples of the reaction catalyst include quarternary ammonium salts such as benzyltrimethylammonium chloride, benzyltrimethylammonium bromide, benzyltriethylammonium chloride, benzyltriethylammonium bromide, benzyltripropylammonium chloride, benzyltripropylammonium bromide, tetramethylammonium chloride, tetraethylammonium bromide, tetrapropylammonium chloride, and tetrapropylammonium bromide; and quarternary phosphonium salts such as tetraphenylphosphonium chloride, tetraphenylphosphonium bromide, benzyltriphenylphosphonium chloride, benzyltriphenylphosphonium bromide, ethyltriphenylphosphonium chloride, and ethyltriphenylphosphonium bromide.

In the present invention, the low-molecular-weight compound as the component (A) may be a mixture of a plurality of low-molecular-weight compounds.

<Component (B)>

The component (B) in the cured film-forming composition of the present invention is a crosslinking agent.

The crosslinking agent as the component (B) is preferably a crosslinking agent having a group that forms crosslinks with the thermally crosslinkable functional group of the component (A), which is, for example, a methylol group or an alkoxymethyl group.

Examples of compounds having these groups include methylol compounds such as alkoxymethylated glycolurils, alkoxymethylated benzoguanamines, and alkoxymethylated melamines.

Specific examples of alkoxymethylated glycolurils include 1,3,4,6-tetrakis(methoxymethyl)glycoluril; 1,3,4,6-tetrakis(butoxymethyl)glycoluril; 1,3,4,6-tetrakis(hydroxymethyl)glycoluril; 1,3-bis(hydroxymethyl)urea; 1,1,3,3-tetrakis(butoxymethyl)urea; 1,1,3,3-tetrakis(methoxymethyl)urea; 1,3-bis(hydroxymethyl)-4,5-dihydroxy-2-imidazolinone; and 1,3-bis(methoxymethyl)-4,5-dimethoxy-2-imidazolinone. Examples of such commercially products include compounds such as glycoluril compounds (trade name: CYMEL (registered trademark) 1170 and Powderlink (registered trademark) 1174) from Nihon Cytec Industries Inc. (former Mitsui Cytec Ltd.), methylated urea resins (trade name: UFR (registered trademark) 65), butylated urea resins (trade name: UFR (registered trademark) 300, U-VAN10S60, U-VAN10R, and U-VAN11HV), and urea/formaldehyde-based resins (highly-condensed type, trade name: BECKAMINE (registered trademark) J-300S, P-955 and N) from DIC Corporation (former Dainippon Ink Chemical Industries Co., Ltd.).

Specific examples of alkoxymethylated benzoguanamines include tetramethoxymethyl benzoguanamine. Examples of such commercially available products are manufactured (trade name: CYMEL (registered trademark) 1123) by Nihon Cytec Industries Inc. (former Mitsui Cytec Ltd.) and (trade name: NIKALAC (registered trademark) BX-4000, BX-37, BL-60 and BX-55H) by Sanwa Chemical Co., Ltd.

Specific examples of alkoxymethylated melamines include hexamethoxymethylmelamine. Examples of such commercially available products include methoxymethyl-type melamine compounds (trade name: CYMEL (registered trademark) 300, 301, 303 and 350) and butoxymethyl-type melamine compounds (trade name: MY COAT (registered trademark) 506 and 508) from Nihon Cytec Industries Inc. (former Mitsui Cytec Ltd.); methoxymethyl-type melamine compounds (trade name: NIKALAC (registered trademark) MW-30, MW-22, MW-11, MS-001, MX-002, MX-730, MX-750 and MX-035) and butoxymethyl-type melamine compounds (trade name: NIKALAC (registered trademark) MX-45, MX-410 and MX-302) from Sanwa Chemical Co., Ltd.

Furthermore, compounds obtained by condensation of such melamine compounds, urea compounds, glycoluril compounds, and benzoguanamine compounds wherein hydrogen atoms of amino groups have been substituted with methylol groups or alkoxymethyl groups may be used. Examples of such compounds include high-molecular-weight compounds produced from the melamine compound and benzoguanamine compound described in US Patent No. 6,323,310. Examples of commercially available products of the above-described melamine compound include trade name: CYMEL (registered trademark) 303, and examples of commercially available products of the above-described benzoguanamine compound include trade name: CYMEL (registered trademark) 1123 (both from Nihon Cytec Industries Inc. (former Mitsui Cytec Ltd.)).

Additionally, a polymer produced using an acrylamide compound or a methacrylamide compound substituted with a hydroxymethyl group (i.e., methylol group) or an alkoxymethyl group, such as N-hydroxymethylacrylamide, N-methoxymethylmethacrylamide, N-ethoxymethylacrylamide, or N-butoxymethylmethacrylamide, can be used as the crosslinking agent of the component (B).

Examples of such polymers include poly(N-butoxymethylacrylamide), copolymer of N-butoxymethylacrylamide with styrene, copolymer of N-hydroxymethylmethacrylamide with methyl methacrylate, copolymer of N-ethoxymethylmethacrylamide with benzyl methacrylate, and copolymer of N-butoxymethylacrylamide, benzyl methacrylate, and 2-hydroxypropylmethacrylate. Such a polymer has a weight average molecular weight (value calculated in terms of polystyrene) of 1,000 to 500,000, preferably 2,000 to 200,000, more preferably 3,000 to 150,000, and still more preferably 3,000 to 50,000.

These crosslinking agents can be used alone or in combination of two or more. Furthermore, a polymer (specific copolymer) having as a unit structure an N-alkoxymethyl group and a polymerizable group containing a C=C double bond, which is described below as an example of the component (D), can be used to also serve as the crosslinking agent of the component (B).

The content of the crosslinking agent of the component (B) in the cured film-forming composition of the present invention is preferably 1 to 500 parts by mass, more preferably 1 to 300 parts by mass, and still more preferably 5 to 200 parts by mass, based on 100 parts by mass of the low-molecular-weight compound as the component (A). If the content of the crosslinking agent is excessively low, the solvent resistance of the cured film obtained from the cured film-forming composition will decrease, leading to decreased vertical orientation properties. Conversely, if the content of the crosslinking agent is excessively high, the vertical orientation properties and preservation stability may decrease.

<Component (C)>

The cured film-forming composition of the present invention may contain, as a component (C), a polymer having a thermally crosslinkable group different from the crosslinking agent of the component (B). Examples of the polymer as the component (C) include polymers with linear or branched structures such as acrylic polymers, polyamic acids, polyimides, polyvinyl alcohols, polyesters, polyester polycarboxylates, polyether polyols, polyester polyols, polycarbonate polyols, polycaprolactone polyols, polyalkylene imines, polyallylamines, celluloses (cellulose or its derivatives), phenol novolak resin, and melamine formaldehyde resin; and cyclic polymers such as cyclodextrins.
Preferred examples of the polymer as the component (C) include acrylic polymers, cyclodextrins, celluloses, polyether polyols, polyester polyols, polycarbonate polyols, and polycaprolactone polyols.
An acrylic polymer as one preferred example of the polymer of the component (C) may be a polymer obtained by polymerization of a monomer having an unsaturated double bond such as acrylic acid, methacrylic acid, styrene, or a vinyl compound, which polymer is obtained by polymerization of monomers including a monomer having a thermally crosslinkable group or a mixture thereof. The acrylic polymer is not particularly limited in terms of the skeleton of the main chain of the polymer constituting the acrylic polymer, the type of side chain, and the like.
Examples of the monomer having a thermally crosslinkable group include a monomer having a polyethylene glycol ester group, a monomer having a $C_{2-5}$ hydroxyalkyl ester group, a monomer having a phenolic hydroxy group, a monomer having a carboxyl group, a monomer having an amino group, and a monomer having an alkoxysilyl group.
Examples of the monomer having a polyethylene glycol ester group include the monoacrylate or monomethacrylate: $H-(OCH_2CH_2)n-OH$, wherein n is 2 to 50, and preferably 2 to 10.
Examples of the monomer having a $C_{2-5}$ hydroxyalkyl ester group include 2-hydroxyethyl methacrylate, 2-hydroxyethyl acrylate, 2-hydroxypropyl methacrylate, 2-hydroxypropyl acrylate, 4-hydroxybutyl acrylate, and 4-hydroxybutyl methacrylate.
Examples of the monomer having a phenolic hydroxy group include p-hydroxystyrene, m-hydroxystyrene, and o-hydroxystyrene.
Examples of the monomer having a carboxyl group include acrylic acid, methacrylic acid, and vinylbenzoic acid.
Examples of the monomer having an amino group include 2-aminoethyl acrylate, 2-aminoethyl methacrylate, aminopropyl acrylate, and aminopropyl methacrylate.
Examples of the monomer having an alkoxysilyl group include 3-acryloxypropyltrimethoxysilane, 3-acryloxypropyltriethoxysilane, 3-methacryloxypropyltrimethoxysilane, 3-methacryloxypropyltrimethoxysilane, vinyltrimethoxysilane, vinyltriethoxysilane, allyltrimethoxysilane, and allyltriethoxysilane.
Furthermore, in an embodiment of the present invention, for the synthesis of the acrylic polymer as an example of the component (C), a monomer not having the above-described thermally crosslinkable group such as a hydroxy group, a carboxyl group, an amide group, an amino group, or an alkoxysilyl group can be used in combination, without impairing the effects of the present invention.
Specific examples of such monomers include acrylate compounds, methacrylate compounds, maleimide compounds, acrylonitrile, maleic anhydride, styrene compounds, and vinyl compounds.
Examples of acrylate compounds include methyl acrylate, ethyl acrylate, isopropyl acrylate, benzyl acrylate, naphthyl acrylate, anthryl acrylate, anthrylmethyl acrylate, phenyl acrylate, 2,2,2-trifluoroethyl acrylate, tert-butyl acrylate, cyclohexyl acrylate, isobornyl acrylate, 2-methoxyethyl acrylate, methoxy triethylene glycol acrylate, 2-ethoxyethyl acrylate, tetrahydrofurfuryl acrylate, 3-methoxybutyl acrylate, 2-methyl-2-adamantyl acrylate, 2-propyl-2-adamantyl acrylate, 8-methyl-8-tricyclodecyl acrylate, and 8-ethyl-8-tricyclodecyl acrylate.
Examples of methacrylate compounds include methyl methacrylate, ethyl methacrylate, isopropyl methacrylate, benzyl methacrylate, naphthyl methacrylate, anthryl methacrylate, anthrylmethyl methacrylate, phenyl methacrylate, 2,2,2-trifluoroethyl methacrylate, tert-butyl methacrylate, cyclohexyl methacrylate, isobornyl methacrylate, 2-methoxyethyl methacrylate, methoxy triethylene glycol methacrylate, 2-ethoxyethyl methacrylate, tetrahydrofurfuryl methacrylate, 3-methoxybutyl methacrylate, 2-methyl-2-adamantyl methacrylate, 2-propyl-2-adamantyl methacrylate, 8-methyl-8-tricyclodecyl methacrylate, and 8-ethyl-8-tricyclodecyl methacrylate.
Examples of maleimide compounds include maleimide, N-methylmaleimide, N-phenylmaleimide, and N-cyclohexylmaleimide.
Examples of styrene compounds include styrene, methylstyrene, chlorostyrene, and bromostyrene.
Examples of vinyl compounds include vinyl ether, methyl vinyl ether, benzyl vinyl ether, phenyl vinyl ether, and propyl vinyl ether.
The amount of the monomer having a thermally crosslinkable group used to produce the acrylic polymer as an example of the component (C) is preferably 2 to 98 mol% based on the total amount of all monomers used to produce the acrylic polymer as an example of the component (C). If the amount of the monomer having a thermally crosslinkable group is excessively small, the liquid crystal orientation properties of the resulting cured film tend to be insufficient. Conversely, if the amount is excessively large, the compatibility with the component (A) tends to decrease.

While the method for producing the acrylic polymer as an example of the component (C) is not particularly limited, the acrylic polymer may be produced by, for example, performing the polymerization reaction at a temperature of 50 to 110°C in a solvent containing monomers including the monomer having a thermally crosslinkable group, the monomer not having a thermally crosslinkable group, as desired, a polymerization initiator, and the like. The solvent used in this case is not particularly limited as long as it dissolves the monomer having a thermally crosslinkable group, the monomer not having a thermally crosslinkable group used as desired, the polymerization initiator, and the like. Specific examples of the solvent will be described in the [Solvent] section below.

The acrylic polymer as an example of the component (C) produced using the above-described method is usually in the form of a solution dissolved in a solvent.

Furthermore, the solution of the acrylic polymer as an example of the component (C) produced using the above-described method may be placed in diethyl ether, water, or the like with stirring to cause reprecipitation, the resulting precipitate may be filtered and washed, and then the resulting product may be dried at ordinary temperature or dried by heating, under ordinary pressure or reduced pressure. As a result, a powder of the acrylic polymer as an example of the component (C) can be obtained. The above-described operations can remove the polymerization initiator and unreacted monomers present with the acrylic polymer as an example of the component (C), resulting in the powder of the purified acrylic polymer as an example of the component (C). If sufficient purification cannot be accomplished at a time, the obtained powder may be redissolved in solvent, and the above-described operations may be repeated.

The acrylic polymer as a preferred example of the component (C) preferably has a weight average molecular weight of 3,000 to 200,000, more preferably 4,000 to 150,000, and still more preferably 5,000 to 100,000. If the weight average molecular weight is excessively large, i.e., over 200,000, the solubility in the solvent may decrease, resulting in decreased handleability. Conversely, if the weight average molecular weight is excessively small, i.e., below 3,000, the acrylic polymer may not be sufficiently thermally cured, resulting in decreased solvent resistance and heat resistance. As used herein, the term "weight average molecular weight" refers to a value obtained by gel permeation chromatography (GPC), using polystyrene as standard samples.

Next, examples of polyether polyols as one preferred example of the polymer of the component (C) include products obtained by the addition of propylene oxide, polyethylene glycol, polypropylene glycol, and the like to polyhydric alcohols such as polyethylene glycol, polypropylene glycol, propylene glycol, bisphenol A, triethylene glycol, and sorbitol. Specific examples of polyether polyols include ADEKA POLYETHER P series, G series, EDP series, BPX series, FC series, and CM series from ADEKA; and UNIOX (registered trademark) HC-40, HC-60, ST-30E, ST-40E, G-450 and G-750, UNIOL (registered trademark) TG-330, TG-1000, TG-3000, TG-4000, HS-1600D, DA-400, DA-700 and DB-400, and NONION (registered trademark) LT-221, ST-221 and OT-221 from NOF Corporation.

Examples of polyester polyols as one preferred example of the polymer of the component (C) include products obtained by the reaction of polybasic carboxylic acids such as adipic acid, sebacic acid, and isophthalic acid with diols such as ethylene glycol, propylene glycol, butylene glycol, polyethylene glycol, and polypropylene glycol. Specific examples of polyester polyols include POLYLITE (registered trademark) OD-X-286, OD-X-102, OD-X-355, OD-X-2330, OD-X-240, OD-X-668, OD-X-2108, OD-X-2376, OD-X-2044, OD-X-688, OD-X-2068, OD-X-2547,OD-X-2420, OD-X-2523, OD-X-2555 and OD-X-2560 from DIC Corporation; and Polyols P-510, P-1010, P-2010, P-3010, P-4010, P-5010, P-6010, F-510, F-1010, F-2010, F-3010, P-1011, P-2011, P-2013, P-2030, N-2010 and PNNA-2016 from Kuraray.

Examples of polycaprolactone polyols as one preferred example of the polymer of the component (C) include products obtained by the ring-opening polymerization of ε-caprolactone, using polyhydric alcohols such as trimethylolpropane and ethylene glycol as initiators. Specific examples of polycaprolactone polyols include POLYLITE (registered trademark) OD-X-2155, OD-X-640 and OD-X-2568 from DIC Corporation; and PLACCEL (registered trademark) 205, L205AL, 205U, 208, 210, 212, L212AL, 220, 230, 240, 303, 305, 308, 312 and 320 from Daicel Chemical Corporation.

Examples of polycarbonate polyols as one preferred example of the polymer of the component (C) include products obtained by the reaction of polyhydric alcohols such as trimethylolpropane and ethylene glycol with diethyl carbonate, diphenyl carbonate, ethylene carbonate, and the like. Specific examples of polycarbonate polyols include PLACCEL (registered trademark) CD205, CD205PL, CD210 and CD220 from Daicel Chemical Corporation; and C-590, C-1050, C-2050, C-2090 and C-3090 from Kuraray.

Examples of celluloses as one preferred example of the polymer of the component (C) include hydroxyalkyl celluloses such as hydroxyethyl cellulose and hydroxypropylcellulose; hydroxyalkyl alkyl celluloses such as hydroxyethyl methyl cellulose, hydroxypropyl methylcellulose, and hydroxyethyl ethyl cellulose; and cellulose. Preferred examples include hydroxyalkyl celluloses such as hydroxyethylcellulose and hydroxypropylcellulose.

Examples of cyclodextrins as one preferred example of the polymer of the component (C) include cyclodextrins such as α-cyclodextrin, β-cyclodextrin, and γ-cyclodextrin; methylated cyclodextrins such as methyl-α-cyclodextrin, methyl-β-cyclodextrin, and methyl-γ-cyclodextrin; and hydroxyalkylcyclodextrins such as hydroxymethyl-α-cyclodextrin, hydroxymethyl-β-cyclodextrin, hydroxymethyl-γ-cyclodextrin, 2-hydroxyethyl-α-cyclodextrin, 2-hydroxyethyl-β-cyclodextrin, 2-hydroxyethyl-γ-cyclodextrin, 2-hydroxypropyl-α-cyclodextrin, 2-hydroxypropyl-β-cyclodextrin, 2-hydroxypropyl-γ-cyclodextrin, 3-hydroxypropyl-α-cyclodextrin, 3-hydroxypropyl-β-cyclodextrin, 3-hydroxypropyl-γ-cyclodextrin, 2,3-dihydroxypropyl-α-cyclodextrin, 2,3-dihydroxypropyl-β-cyclodextrin, and 2,3-dihydroxypropyl-γ-cyclodextrin.

The melamine formaldehyde resin as one preferred example of the polymer of the component (C) is a resin obtained by the polycondensation between melamine and formaldehyde. The resin is of the following formula:

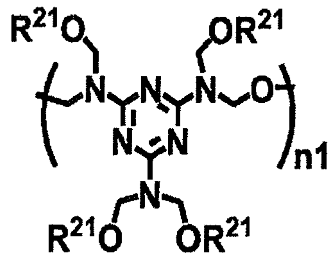

In the formula above, $R^{21}$ is a hydrogen atom or a $C_{1-4}$ alkyl group, and n1 is a natural number representing the number of repeating units.

In the melamine-formaldehyde resin as the component (C), methylol groups produced upon the polycondensation between melamine and formaldehyde have been preferably alkylated from the viewpoint of preservation stability.

While the method for producing the melamine formaldehyde resin as the component (C) is not particularly limited, the melamine formaldehyde resin is typically synthesized by mixing melamine and formaldehyde, and making the mixture weakly alkaline with sodium carbonate, ammonia, or the like, followed by heating at 60 to 100°C. The resulting product may be further reacted with an alcohol to alkoxylate the methylol groups.

The melamine-formaldehyde resin as the component (C) preferably has a weight average molecular weight of 250 to 5,000, more preferably 300 to 4,000, and still more preferably 350 to 3,500. If the weight average molecular weight is excessively large, i.e., over 5,000, the solubility in the solvent may decrease, resulting in decreased handleability. Conversely, if the weight average molecular weight is excessively small, i.e., below 250, the melamine-formaldehyde resin may not be sufficiently thermally cured, resulting in a failure to demonstrate a sufficient effect of improving the solvent resistance and heat resistance.

In an embodiment of the present invention, the melamine-formaldehyde resin as the component (C) may be used in the form of a liquid, or in the form of a solution in which the purified liquid is redissolved in the below-described solvent.

Examples of the phenol novolak resin as one preferred example of the polymer of the component (C) include a phenol-formaldehyde polycondensate.

In the cured film-forming composition of the present invention, the polymer of the component (C) may be used in the form of a powder, or in the form of a solution in which the purified powder is redissolved in the below-described solvent.

The content of the component (C) in the cured film-forming composition of the present invention is preferably 400 parts by mass or less, more preferably 10 to 380 parts by mass, and still more preferably 40 to 360 parts by mass, based on a total amount of 100 parts by mass of the low-molecular-weight compound as the component (A) and the crosslinking agent as the component (B). If the content of the component (C) is excessively high, the liquid crystal orientation properties tend to decrease. Conversely, if the content is excessively small, the adhesion tends to decrease.

Furthermore, in the cured film-forming composition of the present invention, the component (C) may be a mixture of a plurality of polymers described as examples of the component (C).

<Component (D)>

The cured film-forming composition of the present invention may contain an adhesion accelerator for improving the adhesion of the cured film to be formed.

When the cured film formed from the cured film-forming composition of the present invention containing the component (D) is used as an orientation material, polymerizable functional groups of polymerizable liquid crystals and crosslinking reaction sites of the orientation material can be linked by covalent bonding to improve the adhesion between the orientation material and the layer of polymerizable liquid crystals. As a result, a retardation material of an embodiment of the present invention wherein cured polymerizable liquid crystals are layered on the orientation material of an embodiment of the present invention can maintain strong adhesion even under high-temperature, high-humidity conditions, and can exhibit high durability against peeling, for example.

Preferred as the component (D) is a monomer or a polymer having a polymerizable group and a group selected from hydroxy group and N-alkoxymethyl group.

Examples of the component (D) include compounds having hydroxy group(s) and (meth)acrylic group(s), compounds having N-alkoxymethyl group(s) and (meth)acrylic group(s), and polymers having N-alkoxymethyl group(s) and (meth)acrylic group(s). Specific examples of each of the above will be given below.

Examples of the component (D) include polyfunctional acrylates containing hydroxy groups (hereinafter also referred to as "hydroxy group-containing polyfunctional acrylates").

Examples of hydroxy group-containing polyfunctional acrylates as an example of the component (D) include pentaerythritol triacrylate and dipentaerythritol pentaacrylate.

Examples of the component (D) also include a compound having one (meth)acrylic group and one or more hydroxy groups. Preferred examples of such compounds having one (meth)acrylic group and one or more hydroxy groups will be shown below. Note that the compound of the component (D) is not limited to the following compound examples.

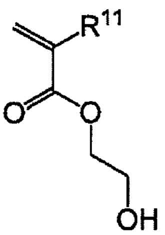
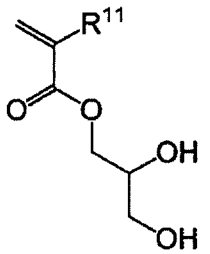
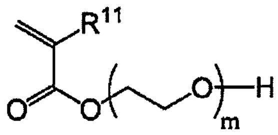
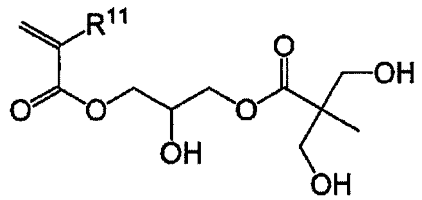

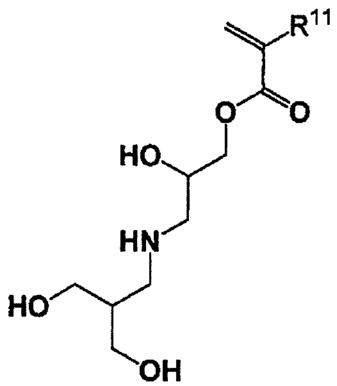
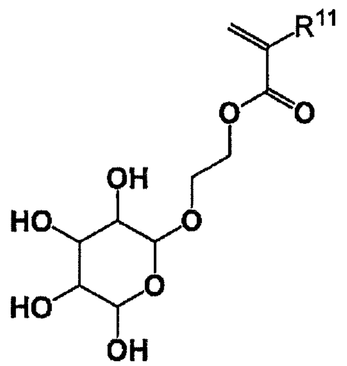

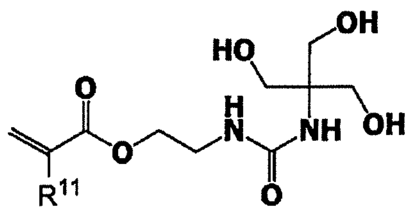
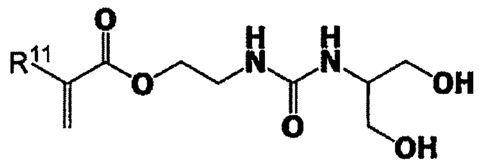

(In the formulae above, $R^{11}$ is a hydrogen atom or a methyl group, and m is an integer from 1 to 10.)

Additionally, examples of the compound of the component (D) include a compound having at least one polymerizable group containing a C=C double bond and at least one N-alkoxymethyl group per molecule.

Examples of the polymerizable group containing a C=C double bond include acrylic group, methacrylic group, vinyl group, allyl group, and maleimide group.

In the above-described compound having at least one polymerizable group containing a C=C double bond and at least one N-alkoxymethyl group, examples of the nitrogen atom N of the N-alkoxymethyl group include a nitrogen atom of an amide, a nitrogen atom of a thioamide, a nitrogen atom of urea, a nitrogen atom of thiourea, a nitrogen atom of urethane, and a nitrogen atom attached to a position adjacent to a nitrogen atom of a nitrogen-containing heterocyclic ring. Thus, examples of the N-alkoxymethyl group include a structure wherein an alkoxymethyl group is attached to a nitrogen atom selected from, for example, a nitrogen atom of an amide, a nitrogen atom of a thioamide, a nitrogen atom of urea, a nitrogen atom of thiourea, a nitrogen atom of urethane, and a nitrogen atom attached to a position adjacent to a nitrogen atom of a nitrogen-containing heterocyclic ring.

While any compounds having the above-described groups may be used as the component (D), preferred examples of the component (D) include a compound of formula (X1):

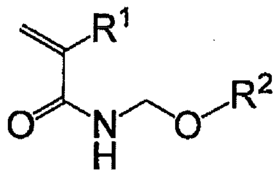

(X1)

(wherein $R^1$ is a hydrogen atom or a methyl group, and $R^2$ is a hydrogen atom or a linear or branched $C_{1-10}$ alkyl group.)

Examples of the alkyl group include methyl group, ethyl group, n-propyl group, isopropyl group, n-butyl group, isobutyl group, sec-butyl group, tert-butyl group, n-pentyl group, 1-methyl-n-butyl group, 2-methyl-n-butyl group, 3-methyl-n-butyl group, 1,1-dimethyl-n-propyl group, 1,2-dimethyl-n-propyl group, 2,2-dimethyl-n-propyl group, 1-ethyl-n-propyl group, n-hexyl group, 1-methyl-n-pentyl group, 2-methyl-n-pentyl group, 3-methyl-n-pentyl group, 4-methyl-n-pentyl group, 1,1-dimethyl-n-butyl group, 1,2-dimethyl-n-butyl group, 1,3-dimethyl-n-butyl group, 2,2-dimethyl-n-butyl group, 2,3-dimethyl-n-butyl group, 3,3-dimethyl-n-butyl group, 1-ethyl-n-butyl group, 2-ethyl-n-butyl group, 1,1,2-trimethyl-n-propyl group, 1,2,2-trimethyl-n-propyl group, 1-ethyl-1-methyl-n-propyl group, 1-ethyl-2-methyl-n-propyl group, n-heptyl group, 1-methyl-n-hexyl group, 2-methyl-n-hexyl group, 3-methyl-n-hexyl group, 1,1-dimethyl-n-pentyl group, 1,2-dimethyl-n-pentyl group, 1,3-dimethyl-n-pentyl group, 2,2-dimethyl-n-pentyl group, 2,3-dimethyl-n-pentyl group, 3,3-dimethyl-n-pentyl group, 1-ethyl-n-pentyl group, 2-ethyl-n-pentyl group, 3-ethyl-n-pentyl group, 1-methyl-1-ethyl-n-butyl group, 1-methyl-2-ethyl-n-butyl group, 1-ethyl-2-methyl-n-butyl group, 2-methyl-2-ethyl-n-butyl group, 2-ethyl-3-methyl-n-butyl group, n-octyl group, 1-methyl-n-heptyl group, 2-methyl-n-heptyl group, 3-methyl-n-heptyl group, 1,1-dimethyl-n-hexyl group, 1,2-dimethyl-n-hexyl group, 1,3-dimethyl-n-hexyl group, 2,2-dimethyl-n-hexyl group, 2,3-dimethyl-n-hexyl group, 3,3-dimethyl-n-hexyl group, 1-ethyl-n-hexyl group, 2-ethyl-n-hexyl group, 3-ethyl-n-hexyl group, 1-methyl-1-ethyl-n-pentyl group, 1-methyl-2-ethyl-n-pentyl group, 1-methyl-3-ethyl-n-pentyl group, 2-methyl-2-ethyl-n-pentyl group, 2-methyl-3-ethyl-n-pentyl group, 3-methyl-3-ethyl-n-pentyl group, n-nonyl group, and n-decyl group.

Specific examples of the compound of formula (X1) above include an acrylamide compound or a methacrylamide compound substituted with a hydroxymethyl group or an alkoxymethyl group, such as N-hydroxymethyl(meth)acrylamide, N-methoxymethyl(meth)acrylamide, N-ethoxymethyl(meth)acrylamide, or N-butoxymethyl(meth)acrylamide. Note that the term "(meth)acrylamide" refers to both methacrylamide and acrylamide.

Other preferred examples of the compound having a polymerizable group containing a C=C double bond and an N-alkoxymethyl group as the component (D) include a compound of formula (X2):

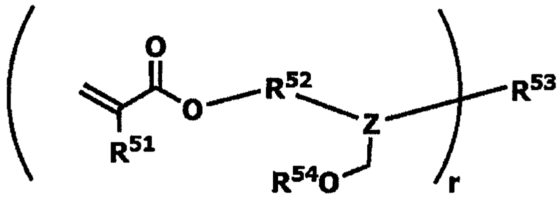

(X2)

(wherein $R^{51}$ is a hydrogen atom or a methyl group. $R^{52}$ and $R^{53}$ are each independently a linear or branched $C_{2-20}$ alkylene group, a $C_{5-6}$ aliphatic cyclic group, or an aliphatic group containing a $C_{5-6}$ aliphatic ring, wherein one methylene group or a plurality of methylene groups not adjacent to each other in each of these groups is or are optionally substituted with an ether bond. $R^{54}$ is a linear or branched $C_{1-20}$ alkyl group, a $C_{5-6}$ aliphatic cyclic group, or an aliphatic group containing a $C_{5-6}$ aliphatic ring, wherein one methylene group or a plurality of methylene groups not adjacent to each other in each of these groups is or are optionally substituted with an ether bond. Z is >NCOO- or -OCON< (wherein "-" means that there is one bond; and ">" or "<" means that there are two bonds, and one of the bonds is attached to $-CH_2OR^{54}$.). Moreover, r is a natural number of 2 or more and 9 or less.)

Specific examples of the $C_{2-20}$ alkylene group in the definition of $R^{52}$ and $R^{53}$ include a divalent to nonavalent group wherein 1 to 8 hydrogen atoms have been further removed from a $C_{2-20}$ alkyl group.

Specific examples of the $C_{2-20}$ alkyl group include ethyl group, n-propyl group, i-propyl group, n-butyl group, i-butyl group, s-butyl group, t-butyl group, n-pentyl group, 1-methyl-n-butyl group, 2-methyl-n-butyl group, 3-methyl-n-butyl group, 1,1-dimethyl-n-propyl group, n-hexyl group, 1-methyl-n-pentyl group, 2-methyl-n-pentyl group, 1,1-dimethyl-n-butyl group, 1-ethyl-n-butyl group, 1,1,2-trimethyl-n-propyl group, n-heptyl group, n-octyl group, n-nonyl group, n-decyl group, n-undecyl group, n-dodecyl group, n-tridecyl group, n-tetradecyl group, n-pentadecyl group, n-hexadecyl group, n-heptadecyl group, n-octadecyl group, n-nonadecyl group, n-eicosyl group, cyclopentyl group, and cyclohexyl group; a group wherein one or more of these groups are bound to such an extent that the number of carbon atoms is up to 20; and a group wherein one methylene group or a plurality of methylene groups not adjacent to each other in each of these groups is or are optionally substituted with an ether bond.

Among the above, a $C_{2-10}$ alkylene group is preferred, and particularly preferably, $R^{52}$ is an ethylene group and $R^{53}$ is a hexylene group, because of the availability of the raw material, for example.

Specific examples of the $C_{1-20}$ alkyl group in the definition of $R^{54}$ include the above-described specific examples of the $C_{2-20}$ alkyl group and methyl group. Among the above, a $C_{1-6}$ alkyl group is preferred, and methyl group, ethyl group, n-propyl group, or n-butyl group is particularly preferred.

While r may be a natural number of 2 or more and 9 or less, for example, r is particularly preferably 2 to 6.

The compound (X2) is obtained by a process of the reaction scheme shown below. Specifically, a carbamate compound of formula (X2-1) shown below having an acrylic group or a methacrylic group (hereinafter also referred to as the "compound (X2-1)") is reacted in a solvent containing trimethylsilyl chloride and paraformaldehyde to synthesize an intermediate of formula (X2-2) shown below, and then an alcohol of the formula $R^{54}$-OH is added to the reaction mixture and the mixture is reacted to produce the compound (X2).

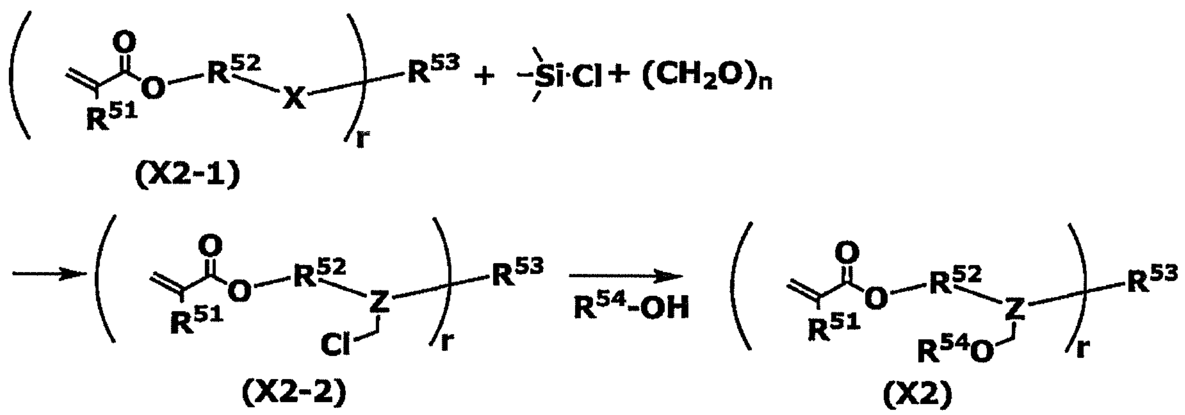


(wherein $R^{51}$, $R^{52}$, $R^{53}$, $R^{54}$, Z, and r have the same meanings as described above, and X is -NHCOO- or -OCONH-.)

The amounts of trimethylsilyl chloride and paraformaldehyde used relative to the compound (X2-1) are not particularly limited; however, in order to complete the reaction, it is preferred to use 1.0 to 6.0 equivalents of trimethylsilyl chloride and 1.0 to 3.0 equivalents of paraformaldehyde per carbamate bond in the molecule, and it is more preferred to use a number of equivalents of trimethylsilyl chloride greater than that of paraformaldehyde.

The reaction solvent is not particularly limited as long as it is inert to the reaction, and examples of the reaction solvent include hydrocarbons such as hexane, cyclohexane, benzene, and toluene; halogenated hydrocarbons such as methylene chloride, carbon tetrachloride, chloroform, and 1,2-dichloroethane; ethers such as diethyl ether, diisopropyl ether, 1,4-dioxane, and tetrahydrofuran; nitriles such as acetonitrile and propionitrile; nitrogen-containing aprotic polar solvents such as N,N-dimethylformamide, N,N-dimethylacetamide, N-methyl-2-pyrrolidone, and 1,3-dimethyl-2-imidazolidinone; and pyridines such as pyridine and picoline. These solvents may be used alone, or as a mixture of two or more. The solvent is preferably methylene chloride or chloroform, and more preferably methylene chloride.

While the amount of the solvent used (reaction concentration) is not particularly limited, the reaction may be performed without solvent, and when a solvent is used, the solvent may be used in an amount of 0.1 to 100 times the mass of the compound (X2-1). The amount of the solvent is preferably 1 to 30 times, and more preferably 2 to 20 times the mass of the compound (X2-1).

While the reaction temperature is not particularly limited, it is -90 to 200°C, for example, preferably -20 to 100°C, and more preferably -10 to 50°C.

The reaction time is usually 0.05 to 200 hours, and preferably 0.5 to 100 hours.

The reaction can be performed under ordinary pressure or applied pressure, in batch or continuous mode.

A polymerization inhibitor may be added during the reaction. The polymerization inhibitor may be BHT (2,6-di-tertiary-butyl-para-cresol), hydroquinone, or para-methoxyphenol, and is not particularly limited as long as it inhibits the polymerization of the acrylic group or methacrylic group.

While the amount of the polymerization inhibitor added is not particularly limited, it is 0.0001 or 10 wt%, and preferably 0.01 or 1 wt%, based on the total amount (mass) of the compound (X2-1). As used herein, the term "wt%" refers to % by mass.

In the step of reacting the intermediate (X2-2) with the alcohol, a base may be added to suppress hydrolysis under acidic conditions. Examples of the base include pyridines such as pyridine and picoline; and tertiary amines such as trimethylamine, triethylamine, diisopropylethylamine, and tributylamine. The base is preferably triethylamine or diisopropylethylamine, and more preferably triethylamine. While the amount of the base added is not particularly limited, 0.01 to 2.0 equivalents, and preferably 0.5 to 1.0 equivalent of the base may be added relative to the amount of trimethylsilyl

chloride added during the reaction.

Alternatively, after the intermediate (X2-2) is obtained from the compound (X2-1), the alcohol may be added and reacted, without isolating the intermediate (X2-2).

While the method of synthesizing the compound (X2-1) is not particularly limited, the compound (X2-1) can be produced by reacting a (meth)acryloyloxyalkyl isocyanate and a polyol compound, or reacting a hydroxyalkyl (meth)acrylate compound and a polyisocyanate compound.

Specific examples of (meth)acryloyloxyalkyl isocyanates include 2-methacryloyloxyethyl isocyanate (trade name: Karenz MOI [registered trademark] from Showa Denko K.K.) and 2-acryloyloxyethyl isocyanate (Karenz AOI [registered trademark] from Showa Denko K.K.).

Specific examples of polyol compounds include diol compounds such as ethylene glycol, propylene glycol, 1,4-butanediol, 1,3-butanediol, 1,5-pentanediol, neopentyl glycol, 3-methyl-1,5-pentanediol, 1,6-hexanediol, and 1,4-cyclohexanedimethanol, triol compounds such as glycerol and trimethylolpropane, pentaerythritol, dipentaerythritol, and diglycerol.

Specific examples of hydroxyalkyl (meth)acrylate compounds include monomers having hydroxy groups such as 2-hydroxyethyl acrylate, 2-hydroxyethyl methacrylate, 2-hydroxypropyl acrylate, 2-hydroxypropyl methacrylate, 4-hydroxybutyl acrylate, 4-hydroxybutyl methacrylate, diethylene glycol monoacrylate, diethylene glycol monomethacrylate, poly(ethylene glycol) ethyl ether acrylate, and poly(ethylene glycol) ethyl ether methacrylate.

Specific examples of polyisocyanate compounds include aliphatic diisocyanates such as hexamethylene diisocyanate, 2,4,4-trimethylhexamethylene diisocyanate, and dimer acid diisocyanate; alicyclic diisocyanates such as isophorone diisocyanate, 4,4'-methylenebis(cyclohexyl isocyanate), and ω,ω'-diisocyanate dimethylcyclohexane; and triisocyanates such as lysine ester triisocyanate, 1,6,11-undecane triisocyanate, 1,8-diisocyanate-4-isocyanate methyloctane, 1,3,6-hexamethylene triisocyanate, and bicycloheptane triisocyanate.

These (meth)acryloyloxyalkyl isocyanate compounds, polyol compounds, hydroxyalkyl (meth)acrylate compounds, and polyisocyanate compounds are generally commercially available, and can also be synthesized using known methods.

Examples of the component (D) also include a polymer (hereinafter also referred to as the "specific copolymer") having as a unit structure an N-alkoxymethyl group and a polymerizable group containing a C=C double bond. This polymer can also serve as the crosslinking agent of the component (B), as described above.

In the above-described specific copolymer, examples of the nitrogen atom N of the N-alkoxymethyl group include a nitrogen atom of an amide, a nitrogen atom of a thioamide, a nitrogen atom of urea, a nitrogen atom of thiourea, a nitrogen atom of urethane, and a nitrogen atom attached to a position adjacent to a nitrogen atom of a nitrogen-containing heterocyclic ring. Thus, examples of the N-alkoxymethyl group include a structure wherein an alkoxymethyl group is attached to a nitrogen atom selected from, for example, a nitrogen atom of an amide, a nitrogen atom of a thioamide, a nitrogen atom of urea, a nitrogen atom of thiourea, a nitrogen atom of urethane, and a nitrogen atom attached to a position adjacent to a nitrogen atom of a nitrogen-containing heterocyclic ring.

While any monomers having the above-mentioned groups may be used as the monomer for providing an N-alkoxymethyl group (hereinafter also referred to as the "specific monomer X1"), preferred examples of the monomer include the compound of formula (X1) above.

Examples of the polymerizable group containing a C=C double bond include acrylic group, methacrylic group, vinyl group, allyl group, and maleimide group.

A specific side chain having the polymerizable group containing a C=C double bond of the component (D) preferably has a carbon atom number of 3 to 16, and has a terminal unsaturated bond. A specific side chain of formula (b2) is particularly preferred. The specific side chain of formula (b2) is attached to an ester bond of the acrylic polymer, as shown in formula (b2-1).

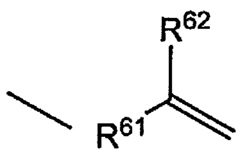

(b2)

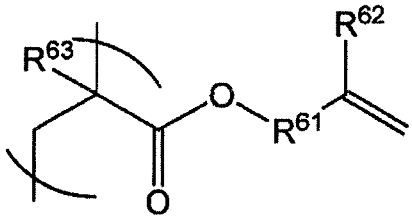

(b2-1)

In formula (b2), $R^{61}$ is a $C_{1-14}$ organic group selected from the group consisting of an aliphatic group, an aliphatic group containing a cyclic structure, and an aromatic group, or a combination of a plurality of organic groups selected from this group. $R^{61}$ may contain an ester bond, an ether bond, an amide bond, or a urethane bond, for example.

In formula (b2), $R^{62}$ is a hydrogen atom or a methyl group. A specific side chain wherein $R^{62}$ is a hydrogen atom is preferable. More preferably, such a specific side chain has a terminal acryloyl group, methacryloyl group, or styryl group.

In formula (b2-1), $R^{63}$ is a hydrogen atom or a methyl group.

The method for producing a polymer having the specific side chain as described above is not particularly limited. Such a polymer may be produced as follows, for example: An acrylic polymer having a specific functional group is produced in advance, using a polymerization method such as radical polymerization. Next, this specific functional group is reacted with a compound having a terminal unsaturated bond (hereinafter referred to as the "specific compound") to produce the specific side chain. As a result, the polymerizable group containing a C=C double bond can be introduced into the polymer as the component (D).

As used herein, the term "specific functional group" refers to a functional group such as a carboxyl group, a glycidyl group, a hydroxy group, an amino group having active hydrogen, a phenolic hydroxy group, or an isocyanate group, or a plurality of functional groups selected from the above.

In the above-described reaction for producing the specific side chain, a preferred combination of the specific functional group and a functional group of the specific compound involved in the reaction is a carboxyl group and an epoxy group, a hydroxy group and an isocyanate group, a phenolic hydroxy group and an epoxy group, a carboxyl group and an isocyanate group, an amino group and an isocyanate group, or a hydroxy group and an acid chloride. A more preferred combination is a carboxyl group and glycidyl methacrylate, or a hydroxy group and isocyanatoethyl methacrylate.

Furthermore, in the above-described reaction for producing the specific side chain, the polymer having the specific functional group is a copolymer obtained using, in addition to the specific monomer X1, a monomer having a functional group for reacting with the specific compound (specific functional group), i.e., a monomer having a carboxyl group, a glycidyl group, a hydroxy group, an amino group having active hydrogen, a phenolic hydroxy group, or an isocyanate group, for example (hereinafter also referred to as the "specific monomer X3"), as an essential component. Such a copolymer has a number average molecular weight of 2,000 to 25,000. Here, such monomers having specific functional groups used for polymerization may be used alone, or as a combination of a plurality of such monomers that do not react with each other during the polymerization.

Specific examples of the specific monomer X3, which is a monomer required to produce the polymer having the specific functional group, will be given below, although the specific monomer X3 is not limited thereto.

Examples of monomers having carboxyl groups include acrylic acid, methacrylic acid, crotonic acid, mono-(2-(acryloyloxy)ethyl)phthalate, mono-(2-(methacryloyloxy)ethyl)phthalate, N-(carboxyphenyl)maleimide, N-(carboxyphenyl)methacrylamide, and N-(carboxyphenyl)acrylamide.

Examples of monomers having glycidyl groups include glycidyl methacrylate, glycidyl acrylate, allyl glycidyl ether, 3-ethenyl-7-oxabicyclo[4.1.0]heptane, 1,2-epoxy-5-hexene, and 1,7-octadiene monoepoxide.

Examples of monomers having hydroxy groups include 2-hydroxyethyl acrylate, 2-hydroxyethyl methacrylate, 2-hydroxypropyl acrylate, 2-hydroxypropyl methacrylate, 4-hydroxybutyl acrylate, 4-hydroxybutyl methacrylate, 2,3-dihydroxypropyl acrylate, 2,3-dihydroxypropyl methacrylate, diethylene glycol monoacrylate, diethylene glycol monomethacrylate, caprolactone 2-(acryloyloxy)ethyl ester, caprolactone 2-(methacryloyloxy)ethyl ester, poly(ethylene glycol) ethyl ether acrylate, poly(ethylene glycol) ethyl ether methacrylate, 5-acryloyloxy-6-hydroxynorbornene-2-carboxylic-6-lactone, and 5-methacryloyloxy-6-hydroxynorbomene-2-carboxylic-6-lactone.

Examples of monomers having amino groups include 2-aminoethyl acrylate and 2-aminomethyl methacrylate.

Examples of monomers having phenolic hydroxy groups include hydroxystyrene, N-(hydroxyphenyl)acrylamide, N-(hydroxyphenyl)methacrylamide, and N-(hydroxyphenyl)maleimide.

Examples of monomers having isocyanate groups include acryloylethyl isocyanate, methacryloylethyl isocyanate, and m-tetramethyl xylene isocyanate.

In the side chain of formula (b2) thus obtained, specific examples of $R^{61}$ include groups of formulae (B-1) to

(B-11):

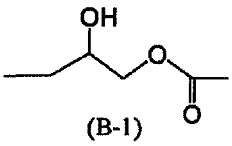
(B-1)

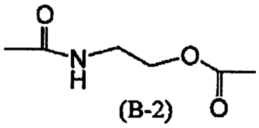
(B-2)

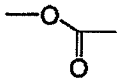
(B-3)

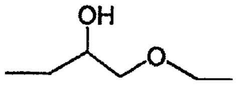
(B-4)

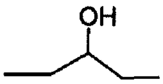
(B-5)

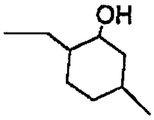
(B-6)

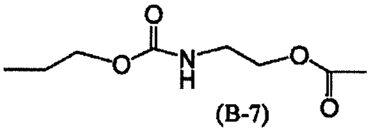
(B-7)

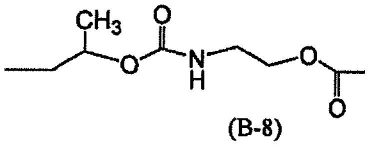
(B-8)

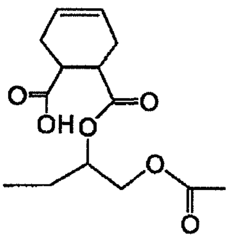
(B-9)

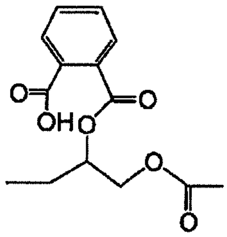
(B-10)

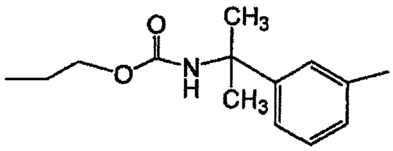
(B-11)

Furthermore, in the present invention, in combination with the specific monomer X1 and the specific monomer X3, a monomer that is copolymerizable with these monomers and not having the above-described thermally crosslinkable functional group can be used to produce the polymer of the component (D).

Specific examples of such monomers include acrylate compounds or methacrylate compounds, maleimide compounds, acrylamide compounds, acrylonitrile, maleic anhydride, styrene compounds, and vinyl compounds, each having a structure different from those of the specific monomer X1 and the specific monomer X3 (hereinafter also referred to as the "monomer X4").

Specific examples of the monomer X4 will be given below, although the monomer X4 is not limited thereto.

Examples of acrylate compounds as an example of the monomer $X^4$ include methyl acrylate, ethyl acrylate, n-propyl acrylate, isopropyl acrylate, n-butyl acrylate, isobutyl acrylate, t-butyl acrylate, benzyl acrylate, naphthyl acrylate, anthryl acrylate, anthrylmethyl acrylate, phenyl acrylate, glycidyl acrylate, 2,2,2-trifluoroethyl acrylate, cyclohexyl acrylate, isobornyl acrylate, 2-methoxyethyl acrylate, methoxytriethylene glycol acrylate, 2-ethoxyethyl acrylate, tetrahydrofurfuryl acrylate, 3-methoxybutyl acrylate, 2-methyl-2-adamantyl acrylate, 2-propyl-2-adamantyl acrylate, 8-methyl-8-tricyclodecyl acrylate, and 8-ethyl-8-tricyclodecyl acrylate.

Examples of methacrylate compounds as an example of the monomer X4 include methyl methacrylate, ethyl methacrylate, n-propyl methacrylate, isopropyl methacrylate, n-butyl methacrylate, isobutyl methacrylate, t-butyl methacrylate, benzyl methacrylate, naphthyl methacrylate, anthryl methacrylate, anthrylmethyl methacrylate, phenyl methacrylate, glycidyl methacrylate, 2,2,2-trifluoroethyl methacrylate, cyclohexyl methacrylate, isobornyl methacrylate, 2-methoxyethyl methacrylate, methoxy triethylene glycol methacrylate, 2-ethoxyethyl methacrylate, tetrahydrofurfuryl methacrylate, 3-methoxybutyl methacrylate, 2-methyl-2-adamantyl methacrylate, γ-butyrolactone methacrylate, 2-propyl-2-adamantyl methacrylate, 8-methyl-8-tricyclodecyl methacrylate, and 8-ethyl-8-tricyclodecyl methacrylate.

Examples of vinyl compounds as an example of the monomer X4 include methyl vinyl ether, benzyl vinyl ether, vinylnaphthalene, vinylcarbazole, allyl glycidyl ether, 3-ethenyl-7-oxabicyclo[4.1.0]heptane, 1,2-epoxy-5-hexene, and 1,7-octadiene monoepoxide.

Examples of styrene compounds as an example of the monomer X4 include styrene, methylstyrene, chlorostyrene, and bromostyrene.

Examples of maleimide compounds as an example of the monomer X4 include maleimide, N-methylmaleimide, N-phenylmaleimide, and N-cyclohexylmaleimide.

The proportion of N-alkoxyalkyl groups present in the polymer of the component (D) is preferably 40 to 90 mol%, and more preferably 50 to 85 mol%, per 100 mol of all repeating units of the polymer.

Specifically, the amount of the specific monomer X1 used to produce the specific copolymer as the component (D) is preferably 40 to 90 mol%, and more preferably 50 to 85 mol%, based on the total amount of all monomers used to produce the specific copolymer as the component (D). If the total amount of the specific monomer X1 is below 40

mol%, curing due to thermal crosslinking with the component (A) may be insufficient. Conversely, if the total amount is over 90 mol%, adhesion with a base material may be adversely affected.

The proportion of the polymerizable group containing a C=C double bond present in the polymer of the component (D) is preferably 10 to 60 mol%, and more preferably 15 to 50 mol%, per 100 mol of all repeating units of the polymer.

Specifically, the amount of the specific monomer X3 used to produce the specific copolymer as the component (D) is preferably 10 to 60 mol%, and more preferably 15 to 50 mol%, based on the total amount of all monomers used to produce the specific copolymer as the component (D). If the total amount of the specific monomer X3 is below 10 mol%, adhesion with a liquid crystal layer may be insufficient. Conversely, if the total amount is over 60 mol%, curing due to thermal crosslinking with the component (A) may be insufficient.

While the method for producing the specific copolymer as an example of the component (D) is not particularly limited, the specific copolymer may be produced by, for example, obtaining a precursor polymer by performing the polymerization reaction at a temperature of 50 to 110°C in a solvent containing the specific monomer X1, the specific monomer X3, other monomers as desired, a polymerization initiator, and the like, and then reacting this specific functional group with a specific compound having a terminal unsaturated bond to produce the specific side chain, thereby introducing the polymerizable group containing a C=C double bond into the polymer as the component (D). The solvent used in this case is not particularly limited as long as it dissolves the specific monomer X1, the specific monomer X3, the other monomers used as desired, the polymerization initiator, and the like. Specific examples of the solvent will be described in the [Solvent] section below.

The acrylic polymer as an example of the component (D) produced using the above-described method is usually in the form of a solution dissolved in a solvent, and can be directly used herein as a solution of the component (D).

Furthermore, the solution of the acrylic polymer as an example of the component (D) produced using the above-described method may be placed in diethyl ether, water, or the like with stirring to cause reprecipitation, the resulting precipitate may be filtered and washed, and then the resulting product may be dried at ordinary temperature or dried by heating, under ordinary pressure or reduced pressure. As a result, a powder of the specific copolymer as the component (D) can be obtained. The above-described operations can remove the polymerization initiator and unreacted monomers present with the specific copolymer as the component (D), resulting in the powder of the purified specific copolymer as an example of the component (D). If sufficient purification cannot be accomplished at a time, the obtained powder may be redissolved in solvent, and the above-described operations may be repeated.

In the composition of the present invention for forming a cured film on the surface of an optical film, the specific copolymer as the component (D) may be used in the form of a powder, or in the form of a solution in which the purified powder is redissolved in the below-described solvent.

Furthermore, in the composition of the present invention for forming a cured film on the surface of an optical film, the specific copolymer as the component (D) may be a mixture of a plurality of specific copolymers.

This polymer has a weight average molecular weight of 1,000 to 500,000, preferably 2,000 to 200,000, more preferably 3,000 to 150,000, and still more preferably 3,000 to 50,000.

The content of the component (D) in the cured film-forming composition of an embodiment of the present invention is preferably 0.1 to 100 parts by mass, and more preferably 5 to 70 parts by mass, based on a total amount of 100 parts by mass of the low-molecular-weight compound as the component (A) and the crosslinking agent as the component (B). Note that when the above-described component (B) is the same as the component (D) (the same compound), the amount of the component (D) blended is taken as the amount of the component (B) blended (in this case, the amount of the component (D) blended is zero). When the content of the component (D) is 0.1 part by mass or more, sufficient adhesion can be imparted to the cured film formed. If, however, the content of the component (D) is more than 100 parts by mass, the liquid crystal orientation properties tend to decrease.

Furthermore, in the cured film-forming composition of an embodiment of the present invention, the component (D) may be a mixture of a plurality of compounds as the component (D).

<Component (E)>

The cured film-forming composition of the present invention may further contain, in addition to the components (A) and (B), a crosslinking catalyst as a component (E).

An acid or a thermal acid generator, for example, can be suitably used as the crosslinking catalyst as the component (E). The component (E) is effective in accelerating the thermal curing reaction of the cured film-forming composition of the present invention.

Specific examples of the component (E) include sulfonic acid group-containing compounds, hydrochloric acid, and salts thereof as the acid. The thermal acid generator is not particularly limited as long as it is a compound that generates an acid by pyrolysis during heat treatment, i.e., a compound that generates an acid by pyrolysis at a temperature of 80 to 250°C.

Specific examples of the acid include hydrochloric acid or salts thereof; sulfonic acid group-containing compounds such as methanesulfonic acid, ethanesulfonic acid, propanesulfonic acid, butanesulfonic acid, pentanesulfonic acid, octanesulfonic acid, benzenesulfonic acid, p-toluenesulfonic acid, camphorsulfonic acid, trifluoromethanesulfonic acid, p-phenolsulfonic acid, 2-naphthalenesulfonic acid, mesitylenesulfonic acid, p-xylene-2-sulfonic acid, m-xylene-2-sulfonic acid, 4-ethylbenzenesulfonic acid, 1H,1H,2H,2H-perfluorooctanesulfonic acid, perfluoro(2-ethoxyethane)sulfonic acid, pentafluoroethanesulfonic acid, nonafluorobutane-1-sulfonic acid, and dodecylbenzenesulfonic acid, or hydrates or salts thereof.

Examples of compounds that thermally generate acids include bis(tosyloxy)ethane, bis(tosyloxy)propane, bis(tosyloxy)butane, p-nitrobenzyl tosylate, o-nitrobenzyl tosylate, 1,2,3-phenylene tris(methylsulfonate), p-toluenesulfonic acid pyridinium salt, p-toluenesulfonic acid morphonium salt, p-toluenesulfonic acid ethyl ester, p-toluenesulfonic acid propyl ester, p-toluenesulfonic acid butyl ester, p-toluenesulfonic acid isobutyl ester, p-toluenesulfonic acid methyl ester, p-toluenesulfonic acid phenethyl ester, cyanomethyl p-toluenesulfonate, 2,2,2-trifluoroethyl p-toluenesulfonate, 2-hydroxybutyl p-toluenesulfonate, N-ethyl-p-toluenesulfonamide, and compounds of the following formulae:

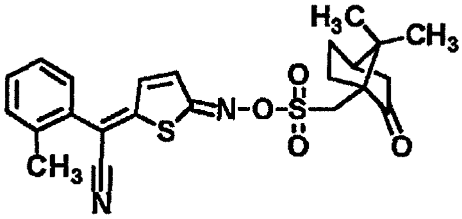 , 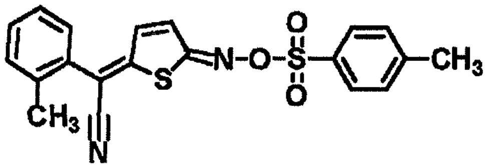 ,

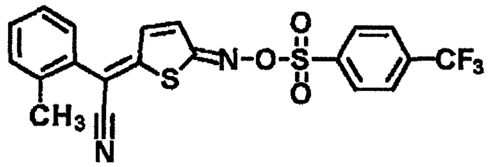 , 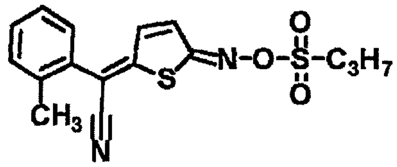 ,

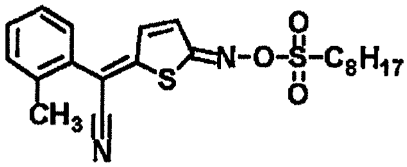 ,

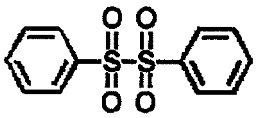 , 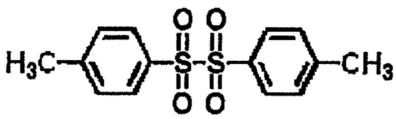 , 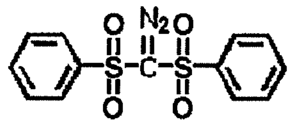 ,

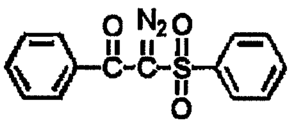 , 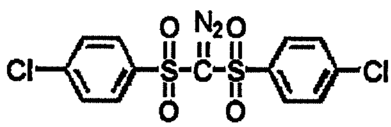 , 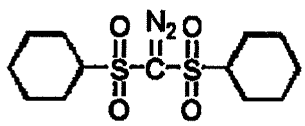 ,

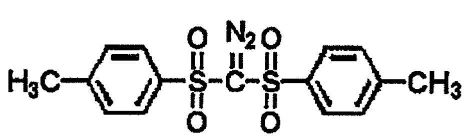 , 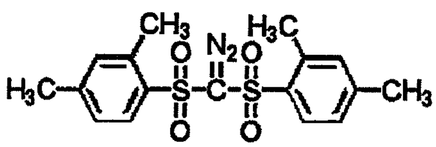 ,

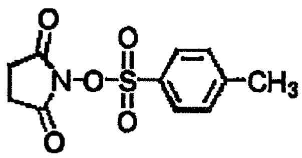 , 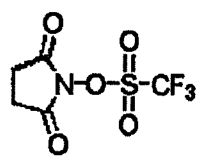 , 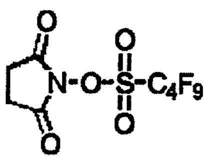 , 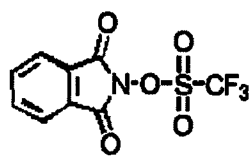 ,

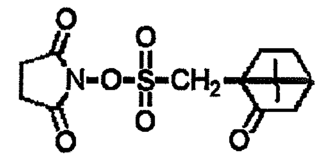,
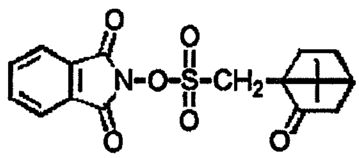,
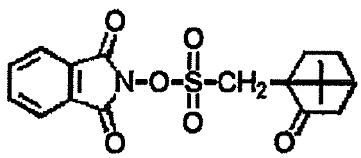,

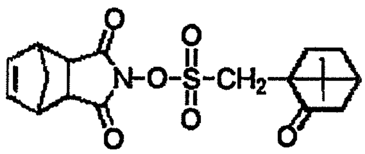,
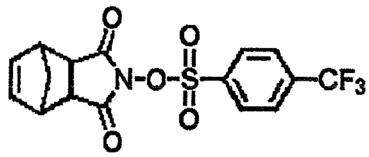,
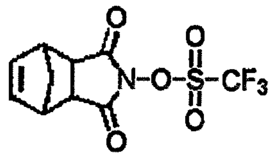,

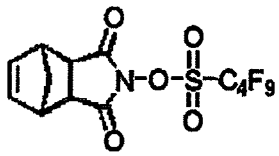,

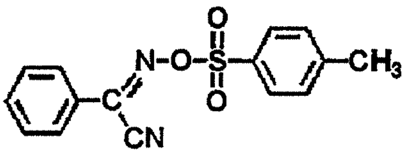,
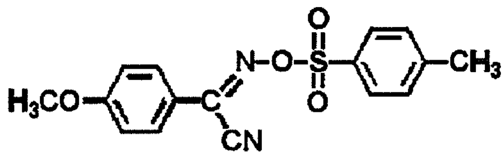,

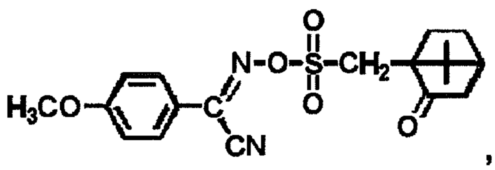,
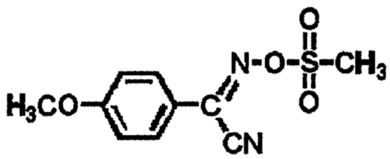,

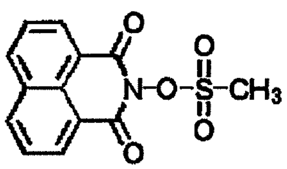,
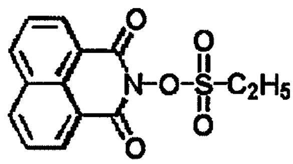,
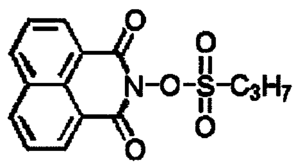,

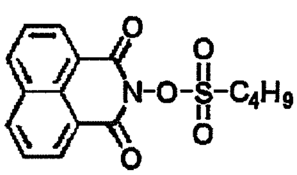,
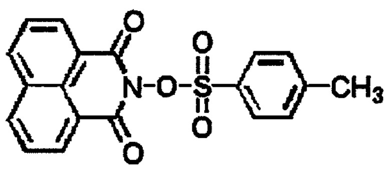,
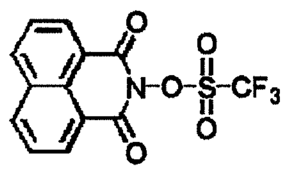,

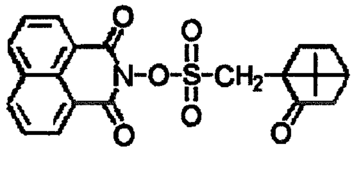,
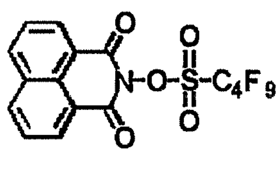,

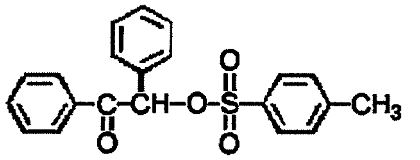,

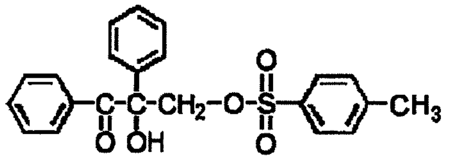,

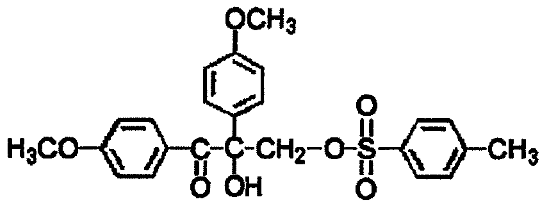,

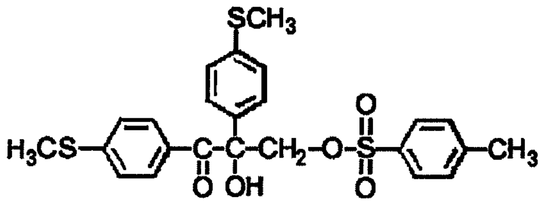,

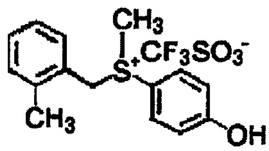

The content of the component (E) in the cured film-forming composition of the present invention is preferably 0.01 to 20 parts by mass, more preferably 0.1 to 15 parts by mass, and still more preferably 0.5 to 10 parts by mass, based on a total amount of 100 parts by mass of the low-molecular-weight compound as the component (A) and the crosslinking agent as the component (B). When the content of the component (E) is 0.01 part by mass or more, sufficient thermosetting properties and solvent resistance can be imparted. If, however, the content of the component (E) is more than 20 parts by mass, the preservation stability of the composition may decrease.

<Solvent>

The cured film-forming composition of the present invention is used mainly in the form of a solution dissolved in a solvent. The solvent used in this case may be any solvent that can dissolve the components (A) and (B), as well as the components (C), (D), (E), and/or the below-described other additives, as required, and is not particularly limited in terms of type, structure, and the like.

Specific examples of solvents include methanol, ethanol, n-propanol, isopropanol, n-butanol, isobutanol, 2-methyl-1-butanol, n-pentanol, ethylene glycol monomethyl ether, ethylene glycol monoethyl ether, methyl cellosolve acetate, ethyl cellosolve acetate, diethylene glycol, diethylene glycol monomethyl ether, diethylene glycol monoethyl ether, propylene glycol, propylene glycol monomethyl ether, propylene glycol monomethyl ether acetate, propylene glycol monoethyl ether, propylene glycol propyl ether, propylene glycol propyl ether acetate, toluene, xylene, methyl ethyl ketone, isobutyl methyl ketone, cyclopentanone, cyclohexanone, 2-butanone, 3-methyl-2-pentanone, 2-pentanone, 2-heptanone, $\gamma$-butyrolactone, ethyl 2-hydroxypropionate, ethyl 2-hydroxy-2-methylpropionate, ethyl ethoxyacetate, ethyl hydroxyacetate, methyl 2-hydroxy-3-methylbutanoate, methyl 3-methoxypropinoate, ethyl 3-methoxypropionate, methyl 3-ethoxypropionate, ethyl 3-ethoxypropionate, methyl pyruvate, ethyl pyruvate, ethyl acetate, butyl acetate, ethyl lactate, butyl lactate, cyclopentyl methyl ether, N,N-dimethylformamide, N,N-dimethylacetamide, and N-methyl-2-pyrrolidone.

When the cured film-forming composition of the present invention is used to produce an orientation material by forming a cured film on a resin film, preferred as the solvent are methanol, ethanol, n-propanol, isopropanol, n-butanol, 2-methyl-1-butanol, 2-heptanone, isobutyl methyl ketone, diethylene glycol, propylene glycol, propylene glycol monomethyl ether, and propylene glycol monomethyl ether acetate, for example, because the resin film exhibits resistance to these solvents.

These solvents can be used alone or in combination of two or more.

<Other Additives>

The cured film-forming composition of the present invention may further contain an adhesion improving agent,

a silane coupling agent, a surfactant, a rheology adjusting agent, a pigment, a dye, a preservation stabilizer, an anti-foaming agent, an antioxidant, and the like, as required, without impairing the effects of the present invention.

<Preparation of Cured Film-Forming Composition>

The cured film-forming composition of the present invention is a composition that contains the low-molecular-weight compound as the component (A) and the crosslinking agent as the component (B), and may contain, as desired, the polymer having a thermally crosslinkable group as the component (C), the adhesion accelerator as the component (D), and the crosslinking catalyst as the component (E), as well as other additives without impairing the effects of the present invention. The cured film-forming composition of the present invention is usually used in the form of a solution in which these components are dissolved in a solvent.

Preferred examples of the cured film-forming composition of the present invention are as follows:

[1]: A cured film-forming composition comprising the component (A); 1 to 300 parts by mass of the component (B) based on 100 parts by mass of the component (A); and 1 to 400 parts by mass of the component (C) based on a total amount of 100 parts by mass of the low-molecular-weight compound as the component (A) and the crosslinking agent as the component (B).

[2]: A cured film-forming composition comprising the component (A); 1 to 300 parts by mass of the component (B) based on 100 parts by mass of the component (A); 1 to 400 parts by mass of the component (C) based on a total amount of 100 parts by mass of the low-molecular-weight compound as the component (A) and the crosslinking agent as the component (B); and a solvent.

[3]: A cured film-forming composition comprising the component (A); 1 to 300 parts by mass of the component (B) based on 100 parts by mass of the component (A); 1 to 400 parts by mass of the component (C) based on a total amount of 100 parts by mass of the low-molecular-weight compound as the component (A) and the crosslinking agent as the component (B); 0.01 to 20 parts by mass of the component (E) based on a total amount of 100 parts by mass of the low-molecular-weight compound as the component (A) and the crosslinking agent as the component (B); and a solvent.

[4]: A cured film-forming composition comprising the component (A); 1 to 300 parts by mass of the component (B) based on 100 parts by mass of the component (A); 1 to 400 parts by mass of the component (C) based on a total amount of 100 parts by mass of the low-molecular-weight compound as the component (A) and the crosslinking agent as the component (B); 0.1 to 100 parts by mass of the component (D) based on a total amount of 100 parts by mass of the low-molecular-weight compound as the component (A) and the crosslinking agent as the component (B); 0.01 to 20 parts by mass of the component (E) based on a total amount of 100 parts by mass of the low-molecular-weight compound as the component (A) and the crosslinking agent as the component (B); and a solvent.

The proportion to be blended, the preparation method, and the like of the cured film-forming composition of the present invention when it is used as a solution will be described in detail below.

The proportion of solids in the cured film-forming composition of the present invention is 1 to 60% by mass, preferably 2 to 50% by mass, and more preferably 2 to 20% by mass, although not particularly limited thereto as long as the components are homogeneously dissolved in the solvent. As used herein, the term "solids" refers to matter from which the solvent has been removed from all components of the cured film-forming composition.

The method for preparing the cured film-forming composition of the present invention is not particularly limited. The cured film-forming composition of the present invention may be prepared using, for example, a method that involves mixing predetermined proportions of the components (B), (C), (D), and (E), for example, into a solution of the component (A) dissolved in a solvent, and forming a homogeneous solution. Alternatively, the cured film-forming composition of the present invention may be prepared by further adding other additives, as required, in an appropriate stage of this preparation method, followed by mixing.

In the preparation of the cured film-forming composition of the present invention, a solution of the specific copolymer (polymer) obtained by the polymerization reaction in a solvent can be directly used. In this case, as described above, the components (B), (C), (D), and (E), for example, are added to the solution of the component (A) to form a homogeneous solution. In this case, a solvent may be further added for adjusting the concentration. Here, the solvent used in the process of producing the component (A) may be the same as or different from the solvent used for adjusting the concentration of the cured film-forming composition.

Furthermore, the prepared solution of the cured film-forming composition is preferably used after being filtered through a filter with a pore size of approximately 0.2 $\mu$m, for example.

<Cured Film, Orientation Material and Retardation Material>

A cured film can be formed as follows: The solution of the cured film-forming composition of the present invention is applied onto a substrate (e.g., a silicon/silicon dioxide-coated substrate, a silicon nitride substrate, a substrate coated with a metal such as aluminum, molybdenum, or chromium, a glass substrate, a quartz substrate, or an ITO substrate) or a film substrate (e.g., a resin film such as a triacetylcellulose (TAC) film, a polycarbonate (PC) film, a cycloolefin polymer (COP) film, a cycloolefin copolymer (COC) film, a polyethylene terephthalate (PET) film, an acrylic film, or a polyethylene film), using bar coating, rotation coating, flow coating, roll coating, slit coating, slit coating followed by rotation coating, inkjet coating, printing, or the like, to form a coating film. The coating film is then heated and dried on a hot plate or in an oven, for example, to form a cured film. The cured film can be directly used as an orientation material.

The conditions for heating and drying may be such that the crosslinking reaction with the crosslinking agent proceeds to such an extent that the components of the cured film (orientation material) are not eluted into a polymerizable liquid crystal solution to be applied thereon. For example, an appropriate heating temperature selected from the range of temperatures of 60 to 200°C and an appropriate heating time selected from the range of times of 0.4 to 60 minutes are adopted. The heating temperature is preferably 70 to 160°C, and the heating time is preferably 0.5 to 10 minutes.

The film thickness of the cured film (orientation material) formed with the curable composition of the present invention is 0.05 to 5 μm, for example, and can be selected as appropriate, in consideration of irregularities on the substrate to be used, as well as the optical and electrical properties of the substrate.

Because the orientation material formed with the cured film composition of the present invention has solvent resistance and heat resistance, a retardation film such as a polymerizable liquid crystal solution having vertical orientation properties can be applied onto the orientation material and oriented thereon. Then, by directly curing the retardation material in an oriented state, the retardation material can be formed as a layer having optical anisotropy. Moreover, when the substrate forming the orientation material is a film, the retardation material is useful as a retardation film.

Furthermore, a liquid crystal display device wherein liquid crystals are oriented can be prepared by laminating two substrates each having the orientation material of the present invention formed as described above, with a spacer sandwiched therebetween, such that the orientation materials on the substrates face each other, and then injecting liquid crystals between these substrates.

Thus, the cured film-forming composition of the present invention can be suitably used for producing various retardation materials (retardation films) or liquid crystal display devices, for example.

## Examples

The present invention will be described in further detail below with reference to examples; however, the present invention is not limited to these examples.

[Abbreviations used in the Examples]

The meanings of the abbreviations used in the following Examples are as follows:

<Polymer Raw Materials>

LAA: lauryl acrylate
HEMA: 2-hydroxyethyl methacrylate
MMA: methyl methacrylate
DCPMA: dicyclopentanyl methacrylate
IBMA: isobornyl methacrylate
BMAA: N-butoxymethylacrylamide
TEPIC-L: trifunctional epoxy compound from Nissan Chemical Industries, Ltd.
LAUA: lauric acid
AIBN: α,α'-azobisisobutyronitrile
BTEAC: benzyltriethylammonium chloride

<Component (A)>

Al: n-octyl alcohol
A2: n-dodecyl alcohol
A3: 4-(4-pentylphenyl)cyclohexanol
A4: 4-(4'-pentyl-[1,1'-bi(cyclohexane)]-4-yl)phenol
A5: 4-pentyl-[1,1'-bi(cyclohexane)]-4-carboxylic acid

<Component (B)>

HMM: a melamine crosslinking agent of the following structural formula [CYMEL (registered trademark) 303 (from Mitsui Cytec Ltd.)]

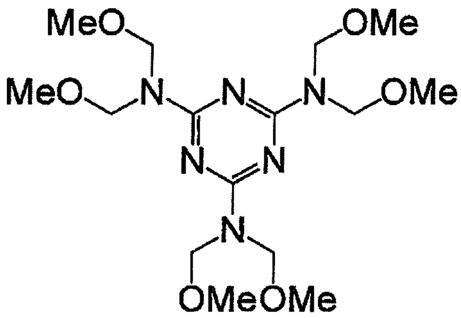

<Component (C)>

PEPO: a polyester polyol polymer (an adipic acid/diethylene glycol copolymer having the following structural unit; molecular weight: 4,800)

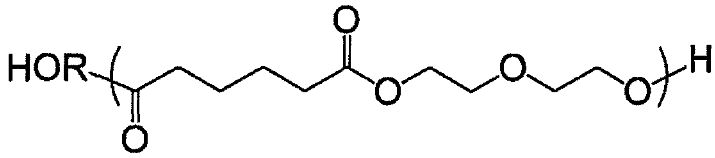

(wherein R is an alkylene group.)

<Component (D)>

BMAA: N-butoxymethylacrylamide
DM-1:

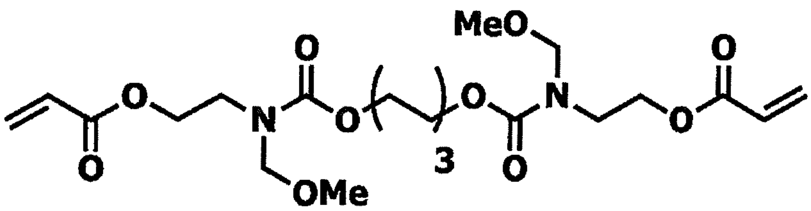

[DM-1]

<Component (E)>

PTSA: p-toluenesulfonic acid · monohydrate

<Solvent>

PM: propylene glycol monomethyl ether
PMA: propylene glycol monomethyl ether acetate
CHN: cyclohexanone

<Measurement of Molecular Weights of Polymers>

The number average molecular weight and the weight average molecular weight of each of the acrylic copolymers obtained in accordance with the following synthesis examples were measured with a GPC apparatus from JASCO Corporation (Shodex (registered trademark) columns KF803L and KF804L), by performing elution by passing tetrahydrofuran as an elution solvent into the columns (column temperature: 40°C) at a flow rate of 1 mL/minute. The number average molecular weight (hereinafter called "Mn") and the weight average molecular weight (hereinafter called "Mw") are expressed below as values calculated in terms of polystyrene.

<Measurement of $^1$H-NMR>

The analytical apparatus and analytical conditions used for $^1$H-NMR analysis are as follows:

Nuclear magnetic resonance apparatus: Varian NMR System 400 NB (400 MHz)
Measurement solvent: $CDCl_3$
Reference material: tetramethylsilane (TMS) ($\delta$ 0.0 ppm for $^1$H)

<Synthesis of Component (A)>

<Synthesis Example 1>

19.5 g of TEPIC-L, 39.4 g of LAUA, and 1.12 g of BTEAC were dissolved in 240.0 g of PM, and the solution was reacted at 110°C for 16 hours, thus obtaining a vertical orientation component (solids concentration: 20% by mass) (A6). Measurement of the epoxy value of the obtained vertical orientation polymer confirmed the elimination of epoxy groups due to the reaction of all of LAUA.

<Synthesis Example 2>

15.4 g of TEPIC-L, 43.7 g of A5, and 0.88g of BTEAC were dissolved in 240.0 g of PM, and the solution was reacted at 110°C for 16 hours, thus obtaining a vertical orientation component (solids concentration: 20% by mass) (A7). Measurement of the epoxy value of the obtained vertical orientation polymer confirmed the elimination of epoxy groups due to the reaction of all of A5.

<Synthesis of Component (B)>

<Synthesis Example 3>

100.0 g of BMAA and 4.2 g of AIBN as a polymerization catalyst were dissolved in 193.5 g of PM, and the solution was reacted at 90°C for 20 hours, thus obtaining an acrylic polymer solution (solids concentration: 35% by mass) (PB1). The obtained acrylic copolymer had an Mn of 2,700 and an Mw of 3,900.

<Synthesis of Component (C)>

<Synthesis Example 4>

100.0 g of MMA, 11.1 g of HEMA, and 5.6 g of AIBN as a polymerization catalyst were dissolved in 450.0 g of PM, and the solution was reacted at 80°C for 20 hours, thus obtaining an acrylic copolymer solution (solids concentration: 20% by mass) (PC1). The obtained acrylic copolymer had an Mn of 4,200 and an Mw of 7,600.

<Synthesis Example 5>

68.6 g of DCPMA, 7.62 g of HEMA, and 3.81 g of AIBN as a polymerization catalyst were dissolved in 160.0 g of PMA and 160.0 g of CHN, and the solution was reacted at 80°C for 20 hours, thus obtaining an acrylic copolymer solution (solids concentration: 20% by mass) (PC2). The obtained acrylic copolymer had an Mn of 4,500 and an Mw of 8,100.

<Synthesis Example 6>

68.6 g of IBMA, 7.62 g of HEMA, and 3.81 g of AIBN as a polymerization catalyst were dissolved in 160.0 g of PMA and 160.0 g of CHN, and the solution was reacted at 80°C for 20 hours, thus obtaining an acrylic copolymer solution (solids concentration: 20% by mass) (PC3). The obtained acrylic copolymer had an Mn of 4,700 and an Mw of 8,400.

<Compound Synthesis Example 1> Synthesis of Compound [DM-1]

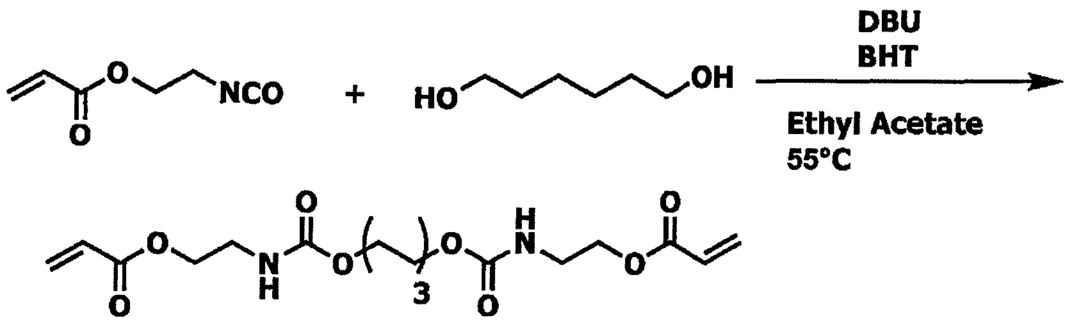


[A-a]

A 2 L four-necked flask was charged with 500 g of ethyl acetate, 35.5 g (0.300 mol) of 1,6-hexanediol, 1.80 g (11.8 mmol) of 1,8-diazabicyclo[5.4.0]-7-undecene (DBU), and 0.45 g (2.04 mmol) of 2,6-di-tertiary-butyl-para-cresol (BHT) in a nitrogen stream at room temperature, and then heated to 55°C with stirring using a magnetic stirrer. To the reaction mixture, 95.9 g (0.679 mol) of 2-isocyanatoethyl acrylate was added dropwise, and the mixture was stirred for 2 hours. The reaction mixture was then analyzed by high-speed liquid chromatography, and the reaction was terminated when the area percentage of an intermediate became 1% or less. 328 g of hexane was added, and the mixture was cooled to room temperature. The resulting precipitated solid was then washed twice with 229 g of hexane and dried to obtain a compound [A-a] (104 g, 0.260 mol, yield: 86.7%).

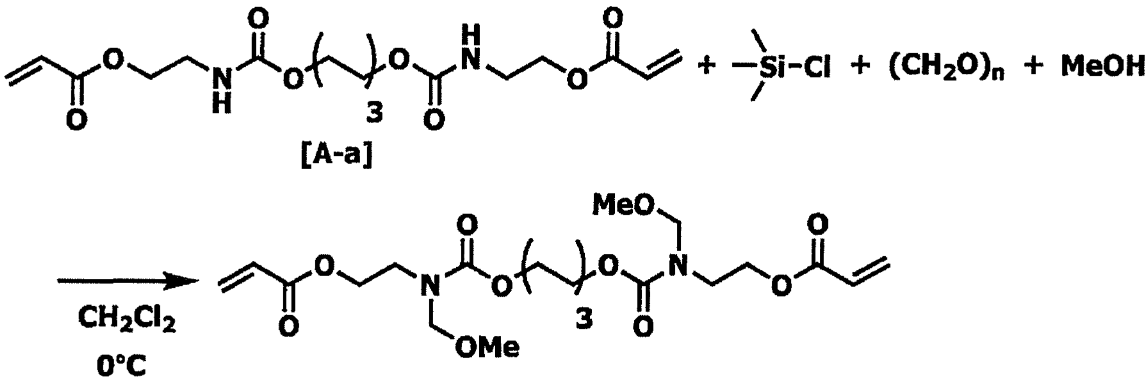


[A-a]

[DM-1]

A 2 L four-necked flask was charged with 1,330 g of dichloromethane, 100 g (0.250 mol) of the compound [A-a], and 22.5 g (0.749 mol) of paraformaldehyde in a nitrogen stream, and then 122 g (1.12 mol) of trimethylsilyl chloride was added dropwise in an ice bath. After 2 hours of stirring, a mixed solution of 63.2 g (0.625 mol) of triethylamine and

240 g of methanol was added dropwise. After 30 minutes of stirring, the mixture was transferred into a 5 L separation funnel, and a separation operation was performed by adding 1,500 g of water. The resulting organic phase was dried over magnesium sulfate, and then a filtrate obtained by filtering off the magnesium sulfate was concentrated and dried to obtain a compound [DM-1] (110 g, 0.226 mol, yield: 90.3%).

The structure of the compound [DM-1] was confirmed by obtaining the following spectral data through $^1$H-NMR analysis.

$^1$H-NMR ($CDCl_3$): $\delta$ 6.42 (d, 2H J = 17.2), 6.17-6.08 (m, 2H), 5.86 (d, 2H J = 10.0), 4.77 (d, 4H J = 19.6), 4.30 (m, 4H), 4.12 (t, 4H J = 6.4), 3.61 (m, 4H), 3.30 (d, 6H J = 12.8), 1.67 (m, 4H), 1.40 (m, 4H).

<Examples and Comparative Examples>

Cured film-forming compositions of examples and comparative examples were prepared based on the compositions shown in Table 1. Next, cured films were formed using the cured film-forming compositions, and each of the obtained cured films was evaluated for its vertical orientation properties.

Table 1

| | Component (A) | Component (B) | Component (C) | Component (D) | Component (E) | Solvent | Solids Concentration (% by Mass) |
|---|---|---|---|---|---|---|---|
| | Type | Type | Type | Type | Type | Type | |
| | Proportion (Part(s) by Mass) | Proportion (Part(s) by Mass) | Proportion (Part(s) by Mass) | Proportion (Part(s) by Mass) | Proportion (Part(s) by Mass) | | |
| Example 1 | A1 | PB1 | PC1 | | PTSA | PM | 5 |
| | 15 | 65 | 80 | | 6 | | |
| Example 2 | A1 | PB1 | PC1 | | PTSA | PM | 5 |
| | 30 | 65 | 80 | | 6 | | |
| Example 3 | A1 | PB1 | PEPO | | PTSA | PM/PMA/CHN | 5 |
| | 15 | 65 | 80 | | 6 | | |
| Example 4 | A1 | PB1 | PC2 | | PTSA | PM/PMA/CHN | 5 |
| | 15 | 65 | 80 | | 6 | | |
| Example 5 | A1 | PB1 | PC3 | | PTSA | PM/PMA/CHN | 5 |
| | 15 | 65 | 80 | | 6 | | |
| Example 6 | A1 | HMM | PC1 | | PTSA | PM | 5 |
| | 15 | 65 | 80 | | 6 | | |
| Example 7 | A1 | PB1 | PC1 | BMAA | PTSA | PM | 5 |
| | 15 | 65 | 80 | 20 | 6 | | |
| Example 8 | A1 | PB1 | PC1 | DM-1 | PTSA | PM | 5 |
| | 15 | 65 | 80 | 20 | 6 | | |
| Example 9 | A2 | PB1 | PC1 | | PTSA | PM | 5 |
| | 15 | 65 | 80 | | 6 | | |
| Example 10 | A3 | PB1 | PC1 | | PTSA | PM | 5 |
| | 15 | 65 | 80 | | 6 | | |
| Example 11 | A4 | PB1 | PC1 | | PTSA | PM | 5 |
| | 15 | 65 | 80 | | 6 | | |

(continued)

| | Component (A) | Component (B) | Component (C) | Component (D) | Component (E) | Solvent | Solids Concentration (% by Mass) |
|---|---|---|---|---|---|---|---|
| | Type | Type | Type | Type | Type | Type | |
| | Proportion (Part(s) by Mass) | Proportion (Part(s) by Mass) | Proportion (Part(s) by Mass) | Proportion (Part(s) by Mass) | Proportion (Part(s) by Mass) | | |
| Example 12 | A5 | PB1 | PC1 | | PTSA | PM | 5 |
| | 15 | 65 | 80 | | 6 | | |
| Example 13 | A6 | PB1 | PC1 | | PTSA | PM | 5 |
| | 15 | 65 | 80 | | 6 | | |
| Example 14 | A7 | PB1 | PC1 | | PTSA | PM | 5 |
| | 15 | 65 | 80 | | 6 | | |
| Example 15 | A1 | PB1 | | | PTSA | PM | 5 |
| | 15 | 65 | | | 6 | | |
| Comparative Example 1 | | PB1 | PC1 | | PTSA | PM | 5 |
| | | 65 | 80 | | 6 | | |
| Comparative Example 2 | A1 | | PC1 | | PTSA | PM | 5 |
| | 15 | | 80 | | 6 | | |

[Evaluation of Vertical Orientation Properties]

<Examples 1-15 and Comparative Examples 1-2>

Each of the cured film-forming compositions of Examples 1-15 and Comparative Examples 1-2 was applied onto various film base materials with a bar coater to give a wet film thickness of 4 μm. The cured film-forming composition was then dried by heating in a heat circulation oven at a temperature of 110°C for 60 seconds, thus forming a cured film on each base material.

A polymerizable liquid crystal solution for vertical orientation RMS03-015 from Merck Ltd. was applied onto this cured film with a bar coater to give a wet film thickness of 6 μm. This coating film on the substrate was exposed at 600 $mJ/cm^2$, thus preparing a retardation material.

These retardation materials thus prepared were measured for their incidence angle dependence of in-plane retardation, using the retardation measuring apparatus RETS 100 from Otsuka Electronics Co., Ltd. Those having an in-plane retardation value of zero at zero incidence angle and having an in-plane retardation within 38 ± 5 nm at an incidence angle of ± 50 degrees were determined to be vertically oriented. The evaluation results are summarized in the section "Vertical Orientation Properties" in Table 2 below.

Table 2

| | Vertical Orientation Properties | | | | |
|---|---|---|---|---|---|
| Base Material Type | TAC | Acrylic | PET | COP | PC |
| Example 1 | ○ | ○ | ○ | ○ | ○ |
| Example 2 | ○ | ○ | ○ | ○ | ○ |
| Example 3 | ○ | ○ | ○ | ○ | ○ |
| Example 4 | ○ | ○ | ○ | ○ | ○ |
| Example 5 | ○ | ○ | ○ | ○ | ○ |
| Example 6 | ○ | ○ | ○ | ○ | ○ |
| Example 7 | ○ | ○ | ○ | ○ | ○ |
| Example 8 | ○ | ○ | ○ | ○ | ○ |
| Example 9 | ○ | ○ | ○ | ○ | ○ |
| Example 10 | ○ | ○ | ○ | ○ | ○ |
| Example 11 | ○ | ○ | ○ | ○ | ○ |
| Example 12 | ○ | ○ | ○ | ○ | ○ |
| Example 13 | ○ | ○ | ○ | ○ | ○ |
| Example 14 | ○ | ○ | ○ | ○ | ○ |
| Example 15 | ○ | ○ | ○ | ○ | ○ |
| Comparative Example 1 | × | × | × | × | × |
| Comparative Example 2 | × | × | × | × | × |

As shown in Table 2, the retardation materials prepared using, as orientation materials, the cured films obtained from the cured film-forming compositions of the examples exhibited vertical orientation properties superior to those of the retardation materials prepared using, as orientation materials, the cured films obtained from the cured film-forming compositions of the comparative examples.

INDUSTRIAL APPLICABILITY

The cured film-forming composition according to the present invention is very useful as a material for forming an orientation material for forming and a liquid crystal orientation film of a liquid crystal display device and an optical anisotropic film provided inside or outside a liquid crystal display device, and is particularly suitable as a material for an optical compensation film for an IPS-LCD.

## Claims

1. An orientation material **characterized by** being obtainable by curing a cured film-forming composition comprising:

    **(A)** a low-molecular-weight compound having a group with vertical orientation properties and a thermally crosslinkable functional group; and
    **(B)** a crosslinking agent,

    wherein component **(A)** is selected from:

    **(A-1):** an alcohol compound wherein a hydroxy group is attached to the group with vertical orientation properties;
    **(A-2):** a phenolic compound wherein a hydroxy group is attached to the group with vertical orientation properties;
    **(A-3):** a carboxylic acid compound wherein a carboxyl group is attached to the group with vertical orientation properties;
    **(A-4):** an amine compound wherein an amino group is attached to the group with vertical orientation properties;
    **(A-5):** an alkoxysilane compound wherein an alkoxysilyl group is attached to the group with vertical orientation properties;
    **(A-6):** a compound obtained by reacting the phenolic compound **(A-2)** or carboxylic acid compound **(A-3)** with a compound having a group selected from an epoxy group and an episulfide group;

    wherein the group with vertical orientation properties is selected from:

    **(a-1):** an alkyl group, wherein the total number of carbon atoms is 6 to 20;
    **(a-2):** a group of formula [1]:

    $$-Y^1-Y^2-Y^3-Y^4-\left(-Y^5-\right)_n-Y^6 \qquad [1]$$

    wherein

    each of $Y^1$ to $Y^4$ is a single bond;
    $Y^5$ is a divalent cyclic group selected from a benzene ring and a cyclohexane ring; n is an integer from 2 to 3, wherein $Y^5$s may be the same or different;
    $Y^6$ is a $C_{1-18}$ alkyl group;
    with the proviso that a total number of carbon atoms is 6 to 30;

    **(a-3):** a group of formula [1]:

    wherein
    each of $Y^1$ to $Y^3$ is a single bond;
    $Y^4$ is a divalent $C_{17-30}$ organic group having a steroid skeleton;
    n is zero;
    $Y^6$ is a hydrogen atom.

2. An orientation material according to claim 1, wherein the crosslinking agent of the component (B) is a crosslinking agent having a methylol group or an alkoxymethyl group.

3. An orientation material according to any one of claims 1 to 2, wherein the cured film forming composition further comprises, as a component (C), a polymer having a thermally crosslinkable group different from the crosslinking agent of the component (B).

4. An orientation material according to any one of claims 1 to 3, wherein the cured film forming composition further comprises an adhesion accelerator as a component (D).

5. An orientation material according to any one of claims 1 to 4, wherein the cured film forming composition further

comprises a crosslinking catalyst as a component (E).

6. An orientation material according to any one of claims 1 to 5, wherein the cured film forming composition comprises 1 to 500 parts by mass of the component (B) based on 100 parts by mass of the component (A).

7. An orientation material according to any one of claims 3 to 6, wherein the cured film forming composition comprises 1 to 400 parts by mass of the component (C) based on a total amount of 100 parts by mass of the components (A) and (B).

8. An orientation material according to any one of claims 4 to 7, wherein the cured film forming composition comprises 0.1 to 100 parts by mass of the component (D) based on a total amount of 100 parts by mass of the components (A) and (B).

9. An orientation material according to any one of claims 5 to 8, wherein the cured film forming composition comprises 0.01 to 20 parts by mass of the component (E) based on a total amount of 100 parts by mass of the components (A) and (B).

10. A retardation material **characterized by** being obtainable by applying polymerizable liquid crystals as a film on an orientation material as defined in any one of claims 1 to 9 and curing the liquid crystal film in an oriented state.

**Patentansprüche**

1. Orientierungsmaterial, **dadurch gekennzeichnet, dass** es erhältlich ist durch Aushärten einer Zusammensetzung zur Ausbildung eines gehärteten Films, umfassend:

**(A)** eine niedermolekulare Verbindung mit einer Gruppe mit vertikalen Orientierungseigenschaften und einer thermisch vernetzbaren funktionellen Gruppe; und
**(B)** ein Vernetzungsmittel,

wobei die Komponente **(A)** ausgewählt ist aus:

**(A-1):** einer Alkoholverbindung, in welcher eine Hydroxygruppe an die Gruppe mit vertikalen Orientierungseigenschaften gebunden ist;
**(A-2):** einer phenolischen Verbindung, in welcher eine Hydroxygruppe an die Gruppe mit vertikalen Orientierungseigenschaften gebunden ist;
**(A-3):** einer Carbonsäureverbindung, in welcher eine Carbonsäuregruppe an die Gruppe mit vertikalen Orientierungseigenschaften gebunden ist;
**(A-4):** einer Aminverbindung, in welcher eine Aminogruppe an die Gruppe mit vertikalen Orientierungseigenschaften gebunden ist;
**(A-5):** einer Alkoxysilanverbindung, in welcher eine Alkoxysilylgruppe an die Gruppe mit vertikalen Orientierungseigenschaften gebunden ist;
**(A-6):** einer Verbindung, die durch Reaktion einer phenolischen Verbindung **(A-2)** oder einer Carbonsäureverbindung **(A-3)** mit einer Verbindung mit einer Gruppe, ausgewählt aus einer Epoxidgruppe und einer Episulfidgruppe, erhalten wird;

wobei die Gruppe mit vertikalen Orientierungseigenschaften ausgewählt ist aus:

**(a-1):** einer Alkylgruppe mit einer Gesamtzahl an Kohlenstoffatomen von 6 bis 20;
**(a-2):** einer Gruppe der Formel [1]:

$$-Y^1-Y^2-Y^3-Y^4-\left(-Y^5-\right)_n-Y^6 \qquad [1]$$

wobei

$Y^1$ bis $Y^4$ jeweils eine Einfachbindung darstellen;
$Y^5$ eine zweiwertige cyklische Gruppe, ausgewählt aus einem Benzolring und einen Cyclohexanring, darstellt;
n eine ganze Zahl von 2 bis 3 darstellt, wobei die $Y^5$ die gleichen oder voneinander verschieden sein können;
$Y^6$ eine $C_{1-18}$-Alkylgruppe darstellt;
mit der Maßgabe, dass die Gesamtzahl der Kohlenstoffatome 6 bis 30 beträgt;

**(a-3):** einer Gruppe der Formel 1:

wobei
$Y^1$ bis $Y^3$ jeweils eine Einfachbindung darstellen;
$Y^4$ eine zweiwertige, organische $C_{17-30}$-Gruppe mit einem Steroidgerüst darstellt;
n 0 ist,
$Y^6$ ein Wasserstoffatom ist.

**2.** Orientierungsmaterial gemäß Anspruch 1, wobei das Vernetzungsmittel der Komponente (B) ein Vernetzungsmittel mit einer Methylolgruppe oder einer Alkoxymethylgruppe ist.

**3.** Orientierungsmaterial gemäß einem der Ansprüche 1 bis 2, wobei die Zusammensetzung zur Ausbildung eines gehärteten Films, als eine Komponente (C), ferner ein Polymer mit einer thermisch vernetzbaren Gruppe umfasst, das sich von dem Vernetzungsmittel der Komponente (B) unterscheidet.

**4.** Orientierungsmaterial gemäß einem der Ansprüche 1 bis 3, wobei die Zusammensetzung zur Ausbildung eines gehärteten Films ferner einen Adhäsionsbeschleuniger als Komponente (D) umfasst.

**5.** Orientierungsmaterial gemäß einem der Ansprüche 1 bis 4, wobei die Zusammensetzung zur Ausbildung eines gehärteten Films ferner einen Vernetzungskatalysator als Komponente (E) umfasst.

**6.** Orientierungsmaterial gemäß einem der Ansprüche 1 bis 5, wobei die Zusammensetzung zur Ausbildung eines gehärteten Films 1 bis 500 Massenanteile der Komponente (B) bezogen auf 100 Massenanteile der Komponente (A) umfasst.

**7.** Orientierungsmaterial gemäß einem der Ansprüche 3 bis 6, wobei die Zusammensetzung zur Ausbildung eines gehärteten Films 1 bis 400 Massenanteile der Komponente (C) bezogen auf eine Gesamtmenge von 100 Massenanteilen der Komponenten (A) und (B) umfasst.

**8.** Orientierungsmaterial gemäß einem der Ansprüche 4 bis 7, wobei die Zusammensetzung zur Ausbildung eines gehärteten Films 0,1 bis 100 Massenanteile der Komponente (D) bezogen auf eine Gesamtmenge von 100 Massenanteilen der Komponenten (A) und (B) umfasst.

**9.** Orientierungsmaterial gemäß einem der Ansprüche 5 bis 8, wobei die Zusammensetzung zur Ausbildung eines gehärteten Films 0,01 bis 20 Massenanteile der Komponente (E) bezogen auf eine Gesamtmenge von 100 Massenanteilen der Komponenten (A) und (B) umfasst.

**10.** Retardationsmaterial, **dadurch gekennzeichnet, dass** es durch Aufbringen polymerisierbarer Flüssigkristalle als Film auf ein Orientierungsmaterial, wie in einem der Ansprüche 1 bis 9 definiert, und Aushärten des Flüssigkristallfilms in einem orientierten Zustand erhältlich ist.

## Revendications

**1.** Matériau d'orientation **caractérisé en ce qu'**il peut être obtenu en durcissant une composition filmogène durcie comprenant :

**(A)** un composé à faible poids moléculaire présentant un groupe avec des propriétés d'orientation verticale et un groupe fonctionnel thermiquement réticulable ; et
**(B)** un agent de réticulation,

dans lequel le composant **(A)** est sélectionné parmi :

**(A-1)** : un composé alcool dans lequel un groupe hydroxy est attaché au groupe avec des propriétés d'orientation verticale ;
**(A-2)** : un composé phénolique dans lequel un groupe hydroxy est attaché au groupe avec des propriétés d'orientation verticale ;
**(A-3)** : un composé acide carboxylique dans lequel un groupe carboxyle est attaché au groupe avec des propriétés d'orientation verticale ;
**(A-4)** : un composé amine dans lequel un groupe amino est attaché au groupe avec des propriétés d'orientation verticale ;
**(A-5)** : un composé alcoxysilane dans lequel un groupe alcoxysilyle est attaché au groupe avec des propriétés d'orientation verticale ;
**(A-6)** : un composé obtenu en faisant réagir le composé phénolique **(A-2)** ou le composé acide carboxylique **(A-3)** avec un composé présentant un groupe sélectionné parmi un groupe époxy et un groupe épisulfure ;

dans lequel le groupe avec des propriétés d'orientation verticale est sélectionné parmi :

**(a-1)** : un groupe alkyle, dans lequel le nombre total d'atomes de carbone est de 6 à 20;
**(a-2)** : un groupe de formule [1] :

$$-Y^1-Y^2-Y^3-Y^4-\left(-Y^5-\right)_n-Y^6 \qquad [1]$$

dans lequel

chacun de $Y^1$ à $Y^4$ est une liaison simple ;
$Y^5$ est un groupe cyclique divalent sélectionné parmi un cycle benzène et un cycle cyclohexane ;
n est un nombre entier compris entre 2 et 3, dans lequel des $Y^5$ peuvent être identiques ou différents ;
$Y^6$ est un groupe alkyle en $C_{1-18}$ ;
à condition qu'un nombre total d'atomes de carbone soit de 6 à 30 ;

**(a-3)** : un groupe de formule [1] :

dans lequel
chacun de $Y^1$ à $Y^3$ est une liaison simple ;
$Y^4$ est un groupe organique en $C_{17-30}$ divalent présentant un squelette stéroïde ;
n est zéro ;
$Y^6$ est un atome d'hydrogène.

**2.** Matériau d'orientation selon la revendication 1, dans lequel l'agent de réticulation du composant (B) est un agent de réticulation présentant un groupe méthylol ou un groupe alcoxyméthyle.

**3.** Matériau d'orientation selon l'une quelconque des revendications 1 à 2, dans lequel la composition filmogène durcie comprend en outre, comme composant (C), un polymère présentant un groupe thermiquement réticulable différent de l'agent de réticulation du composant (B).

**4.** Matériau d'orientation selon l'une quelconque des revendications 1 à 3, dans lequel la composition filmogène durcie comprend en outre un accélérateur d'adhésion comme composant (D).

**5.** Matériau d'orientation selon l'une quelconque des revendications 1 à 4, dans lequel la composition filmogène durcie comprend en outre un catalyseur de réticulation comme composant (E).

**6.** Matériau d'orientation selon l'une quelconque des revendications 1 à 5, dans lequel la composition filmogène durcie comprend de 1 à 500 parties en masse du composant (B) sur la base de 100 parties en masse du composant (A).

7. Matériau d'orientation selon l'une quelconque des revendications 3 à 6, dans lequel la composition filmogène durcie comprend de 1 à 400 parties en masse du composant (C) sur la base d'une quantité totale de 100 parties en masse des composants (A) et (B).

8. Matériau d'orientation selon l'une quelconque des revendications 4 à 7, dans lequel la composition filmogène durcie comprend de 0,1 à 100 parties en masse du composant (D) sur la base d'une quantité totale de 100 parties en masse des composants (A) et (B).

9. Matériau d'orientation selon l'une quelconque des revendications 5 à 8, dans lequel la composition filmogène durcie comprend de 0,01 à 20 parties en masse du composant (E) sur la base d'une quantité totale de 100 parties en masse des composants (A) et (B).

10. Matériau de retardation **caractérisé en ce qu'**il peut être obtenu en appliquant des cristaux liquides polymérisables comme un film sur un matériau d'orientation comme défini selon l'une quelconque des revendications 1 à 9 et en durcissant le film à cristaux liquides dans un état orienté.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H02256023 B
- JP H02256023 A
- JP HI1133408 B
- JP H11133408 A
- JP 2009122715 A
- JP 2001281669 A
- EP 2557120 A1
- JP 2008299327 A
- WO 2014136889 A1
- US 6323310 B